# EUROPEAN PATENT SPECIFICATION

(11) **EP 4 308 386 B1**
(45) Date of publication and mention of the grant of the patent: **18.06.2025**
(21) Application number: 22714081.1
(22) Date of filing: 14.03.2022
(51) Int. Cl.: B60B 9/20

(54) **A WHEEL ASSEMBLY TO BE COUPLED TO A HUB OF A VEHICLE AND RELATED METHOD**
RADANORDNUNG ZUM ANKUPPELN AN EINE FAHRZEUGNABE UND ZUGEHÖRIGES VERFAHREN
ENSEMBLE DE ROUES À COUPLER AU MOYEU D'UN VÉHICULE ET MÉTHODE CONNEXE

(30) Priority: 17.03.2021 US 202163162251 P; 13.03.2022 US 202217693376
(43) Date of publication of application: 24.01.2024
(73) Proprietor: GACW Incorporated, Chandler, AZ 85226 (US)
(72) Inventor: KEMENY, Zoltan, Chandler, Arizona 85226 (US)
(74) Representative: Page White Farrer
(86) International application number: PCT/US2022/020137
(87) International publication number: WO 2022/197588

(56) References cited:
- US-A1- 2020 114 682
- US-A1- 2020 324 572
- US-A1- 2020 353 774

## Description

### Technical Field

The present invention relates to the field of wheels, and more particularly, to a wheel assembly to be coupled to a hub of a vehicle and related method.

### Background

A typical wheel may include a rim and tire surrounding the rim. The tire transfers a load of a vehicle from the axle through the wheel to the ground. Tires, for example, those found on most vehicles are pneumatic tires. In other words, a typical tire is pneumatically inflated, for example, with air or other gas, such as nitrogen. More particularly, air is injected into the space between the rim and the inside of the tire to inflate it.

During operation, being pneumatically inflated, a tire absorbs the forces as the vehicle travels over the road surface. The tire and associated inflation pressure may be selected to absorb the above-noted forces while reducing any deformation. However, in many instances, excessive forces placed on the tire may cause the tire and/or rim to deform, puncture, or blowout. Typical forces also cause tread wear of the tire, while excessive forces may also cause rapid tread wear that may lead to a shortened lifespan of the tire and decreased structural integrity of the wheel.

To address the shortcomings of pneumatic-based wheels, non-pneumatic wheels have been developed. By non-pneumatic, it is meant that air or other gas is not injected to inflate an interior volume of a tire. One approach to a non-pneumatic wheel uses mechanical springs. For example, U.S. Patent No. 911,975 to Gustafson discloses a spring wheel. Secondary spokes are arranged in pairs between pairs of main spokes and the members of each of the secondary spokes therefore pass upon opposite sides of a corresponding pair of intersecting braces. Each of the secondary spokes includes a pair of telescoping members that are pivotally connected at its outer end to ears formed on the hub and extends at its opposite end into a corresponding member.

U.S. Patent No. 1,601,518 to Weston discloses a resilient wheel that includes radial arms. Connection between a hub and rim members may be provided by pivot pins in outer ends of these arms that have links journaled thereon. The links are pivotally articulated with bent levers, which are in turn pivoted on bracket arms that extend inwardly from the part-circular plates, which are mounted on an inner periphery of a tire holding rim.

Another approach includes a disc between a wheel hub and outer rim. For example, U.S. Patent No. 1,808,886 to Courtney also discloses a disc or sidewall between a wheel hub and a rim. The disc is engaged by studs that project from the wheel hub and extends from an outer flange obliquely to the wheel hub. The disc assists the wheel tire and rim by resisting any tendency to become displayed laterally as a result of stresses occurring while the wheel is turning.

U.S. Patent No. 1,979,935 to Henap discloses a hydraulic spoke wheel. Each of the hydraulic spokes include telescoping sections in the form of an outer section and an inner section. The outer section has the stud projecting from one end. The inner section extends from the outer section and is equipped at its extended end with the stem.

U.S. Patent No. 6,041,838 to Al-Sabah discloses a wheel that includes spokes positioned in a spaced apart relation to each other. Each of the spokes has a first end connected to a rim and a second end connected to a plate member tip of a hub plate member in an offset position from the respective radial axis thereof. The offset position of each of the spokes is further defined by each of the spokes being connected to a respective one of the plate member tips at a predetermined angle (e.g., less than 90-degrees) from the radial axis thereof and defining an operative offset spoke axis, which intersects the radial axis of the plate member tips at the predetermined angle.

U.S. Patent No. 6,698,480 to Cornellier discloses shock absorbing spokes each having a central cylindrical tube. Each tube has an interior cap having an aperture and an exterior cap having an aperture. Each spoke has an interior piston, a rod with an aperture and a pin. The pin pivotably couples one of the spokes to the hub. Each spoke has an exterior piston, a rod with an aperture and a pin. The pin pivotably couples one of the spokes to the rim assembly. The interior pistons and exterior pistons divide the space within each tube into an interior chamber, an exterior chamber, and a central chamber.

U.S. Patent Application Publication No. 2020/0353774 to Kemeny is directed to a wheel assembly to be coupled to a hub of a vehicle, and includes an inner rim to be coupled to the hub of the vehicle, an outer rim surrounding the hub, and gas springs operatively coupled between the inner rim and the outer rim to provide a gas suspension permitting relative movement between the inner rim and the outer rim. The wheel assembly may also include a sidewall cover assembly that includes an inner sidewall cover coupled to the inner rim and extending radially outward toward the outer rim. The sidewall cover assembly may also include an outer sidewall cover coupled to the outer rim and extending radially inward toward the inner rim and in sliding overlapping relation with the inner sidewall cover permitting relative movement between the inner sidewall cover and the outer sidewall cover.

Despite advances in pneumatic tire wheels, and non-pneumatic tire wheels, there is still a need for improvements in wheel technology, particularly, for large construction vehicles, or mining vehicles, for example. The expense of wheel replacement, and the downtime experienced during wheel replacement may add significant expenses to the construction or mining projects.

### Summary

A wheel assembly according to the invention discloses the features of claim 1.

The wheel assembly includes a plurality of hydraulic dampers operatively coupled between the inner rim and the outer rim. Each hydraulic damper is aligned side-by-side with a corresponding one of the plurality of gas springs, for example.

The wheel assembly includes a plurality of cable ties each coupled to opposing ends of a corresponding one of the plurality of gas springs, for example. The plurality of gas springs have an operating stroke permitting the outer ring to define the mechanical stop.

The wheel assembly includes a respective attachment bracket for each gas spring coupled to the outer rim. The wheel assembly includes a plurality of lateral stops coupled between the outer rim and the inner rim and cooperating to limit relative lateral movement between the outer ring and the inner rim, for example. The plurality of lateral stops includes a plurality of hinge retainers, for example.

The outer rim may have a diameter of at least 3.5 feet, for example. Each of the plurality of gas springs includes a double-acting gas cylinder and associated piston.

A method of making a wheel assembly to be coupled to a hub of a vehicle according to the invention discloses the features of claim 11.

### Brief Description of the Drawings

FIG. 1 is a side view of a vehicle having wheel assemblies.
FIG. 2 is a perspective view of a wheel assembly.
FIG. 3 is another perspective view of the wheel assembly of FIG. 2.
FIG. 4 is another perspective view of the wheel assembly of FIG. 2.
FIG. 5 is a perspective view of a portion of the wheel assembly of FIG. 2.
FIG. 6 is a perspective view of the inner rim, disk, and attachment brackets of the wheel assembly of FIG. 2.
FIG. 7 is a perspective view of a portion of a wheel assembly including tread assemblies and a removable sidewall.
FIG. 8 is a perspective view of a portion of a wheel assembly.
FIG. 9 is another perspective view of a portion of a wheel assembly.
FIG. 10 is a perspective view of the tread member support of FIG. 9.
FIG. 11 is a perspective view of a portion of the tread assembly of FIG. 9.
FIG. 12 is a perspective view of a tread member of the tread assembly of FIG. 9.
FIG. 13 is a perspective view of an inboard clamping member of a wheel assembly.
FIG. 14 is a perspective view of an outboard clamping member of a wheel assembly.
FIG. 15 is a perspective view of a portion of a wheel assembly including outboard clamping members.
FIG. 16 is a cross-sectional view of a portion of an outer rim, retaining feature, and tread assembly.
FIG. 17 is a cross-sectional view of a portion of a tread assembly.
FIG. 18 is a perspective view of a wheel assembly.
FIG. 19 is a schematic diagram of the lateral stops of FIG. 18.
FIG. 20 is a schematic diagram of a portion of a wheel assembly including a local controller for controlling an operating response of a gas spring.
FIG. 21 is a schematic diagram of a portion of a wheel assembly including a local controller for controlling an operating response of a gas spring.
FIG. 22 is a perspective view of the inboard removable sidewall of the wheel assembly.
FIG. 23 is a perspective view of an outboard removable sidewall of a wheel assembly.
FIG. 24 is a perspective view of a wheel assembly.
FIG. 25 is a schematic diagram of a portion of a wheel assembly including a sensor for measuring distance between the inner and outer rims.
FIG. 26 is a side cut-away view of a portion of a wheel assembly.
FIG. 27 a perspective cut-away view of the portion of the wheel assembly of FIG. 26.
FIG. 28 is a perspective view of a cover ring and flexible seal of FIG. 27.
FIG. 29 is another perspective view of the cover ring and flexible seal of FIG. 27.
FIG. 30 is a perspective view of the flexible seal of FIG. 27.
FIG. 31 is a perspective view of another cover ring and flexible seal of FIG. 27.
FIG. 32 is a perspective view of a portion of a wheel assembly.
FIG. 33 is a perspective view of an inboard lateral stop of the wheel assembly of FIG. 32.
FIG. 34 is a perspective view of a wheel assembly.
FIG. 35 is a perspective view of a portion of the wheel assembly of FIG. 34 and without weight-reduction openings in the inner ring.

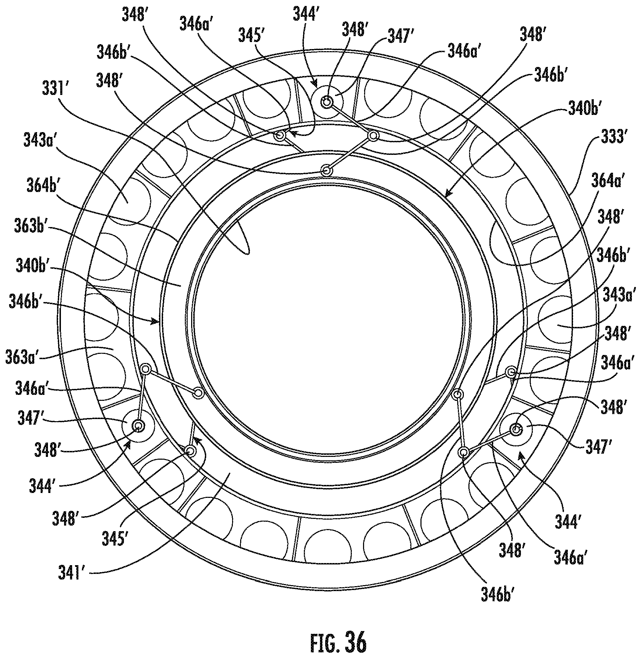

FIG. 36 is a side view of the portion of the wheel assembly of FIG. 35.
FIG. 37 is a perspective view of inboard and outboard lateral stops of the wheel assembly of FIG. 34.
FIG. 38 is a perspective view of a portion of a wheel assembly in accordance with an embodiment.
FIG. 39 is a perspective view of a portion of a wheel assembly in accordance with an embodiment.
FIG. 40 is a perspective view of a tread body in accordance with an embodiment.
FIG. 41 is a side view of the tread body in FIG. 40.
FIG. 42 is a perspective view of a gas spring and hydraulic damper.
FIG. 43 is a schematic cross-sectional view of the gas spring and hydraulic damper of FIG. 42.
FIG. 44 is a schematic diagram of a mine material processing apparatus.
FIG. 45 is a perspective view of a wheel assembly of the mine material processing apparatus of FIG. 44.
FIG. 46 is a perspective view of a portion of a wheel assembly for use with a mine material processing apparatus.
FIG. 47 is a front view of a portion of a wheel assembly of FIG. 46.
FIG. 48 is a side view of the tread member of the wheel assembly of FIG. 46.
FIG. 49 is a perspective view of a portion of a wheel assembly for use with a mine material processing apparatus.

### Detailed Description

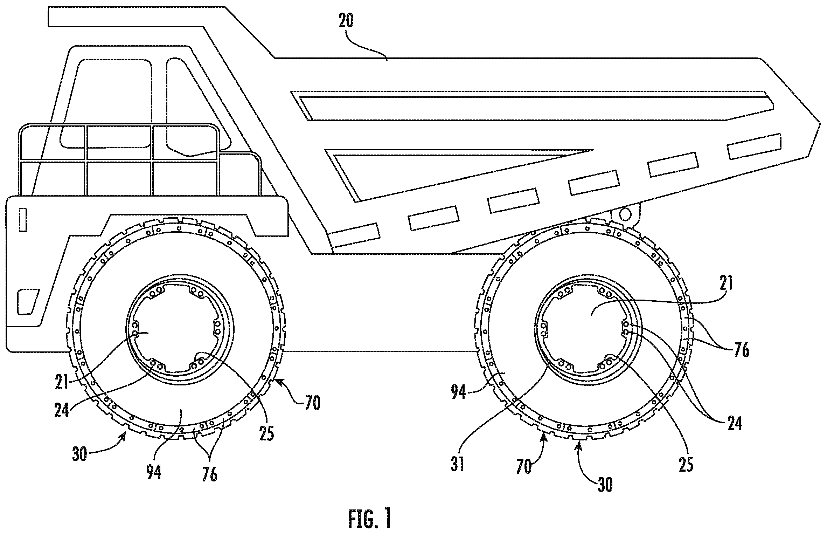

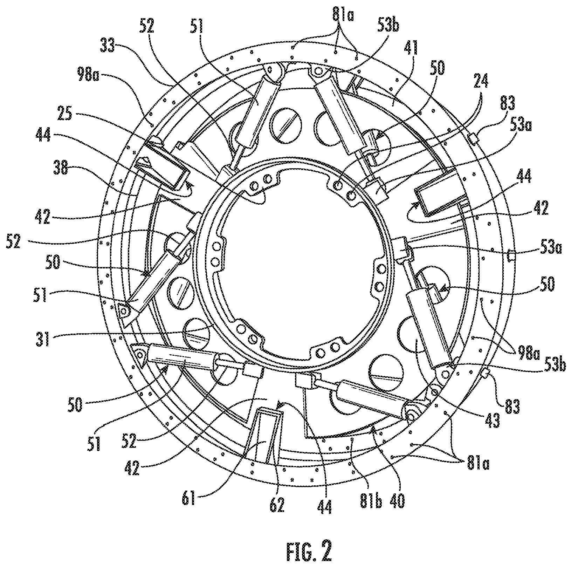

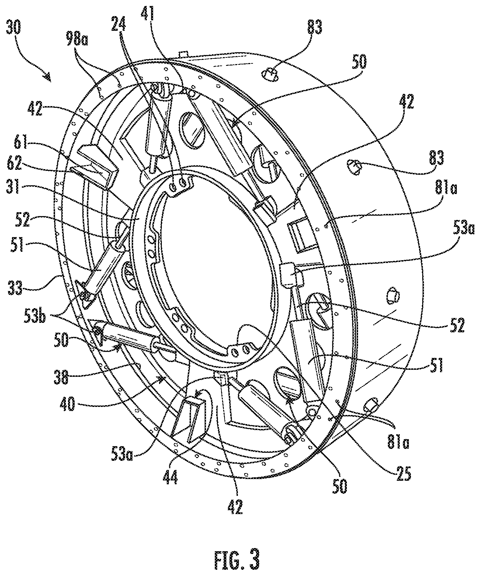

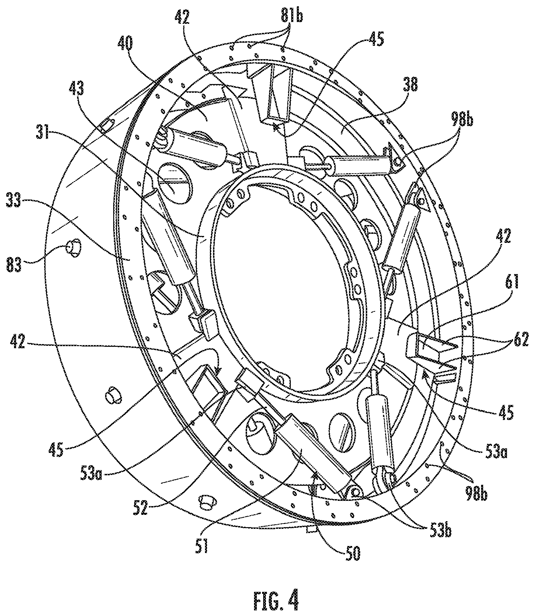

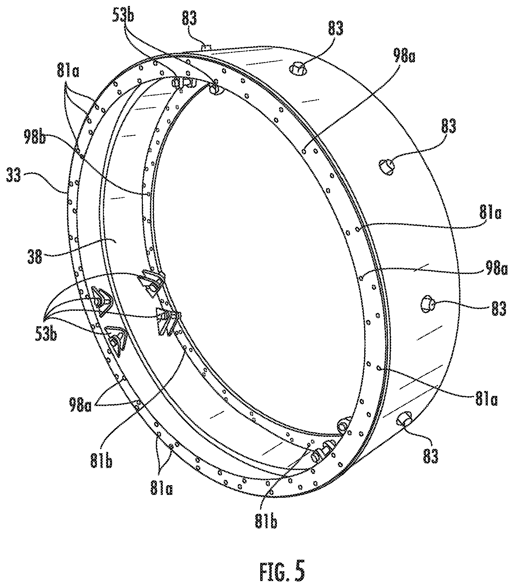

Referring initially to FIGS. 1-5, a wheel assembly **30** to be coupled to a hub **21** of a vehicle **20** includes an inner rim **31** to be coupled to the hub of the vehicle. The inner rim **31** may be coupled to the hub **21** of the vehicle **20** with fasteners through fastener receiving passageways **24** within inwardly extending flange ring **25.** Illustratively, the flange ring **25** is centered laterally within the inner rim **31,** but may be positioned in another arrangement based upon a desired mounting arrangement with the hub **21.** Other coupling arrangements may be used to couple the inner rim **31** to the hub **21.**

The wheel assembly **30** also includes an outer rim **33** surrounding the inner rim **31.** The outer rim **33** may have a diameter of at least 3.5 feet, and more particularly, at least 4 feet. Those skilled in the art will appreciate that with a diameter of at least 3.5 feet, the wheel assembly **30,** and more particularly, the outer rim **33** may be particularly advantageous for relatively large or heavy machinery, such as, for example, earth excavation equipment and mining equipment. A typical overall outer diameter of such a wheel assembly may be 100 inches or greater. The outer rim **33** may have an increased thickness portion **38** along an inner circumference thereof. The increased thickness portion **38** may be provided by welding a separate reinforcing ring in position or it may be integrally formed with the outer rim **33,** for example.

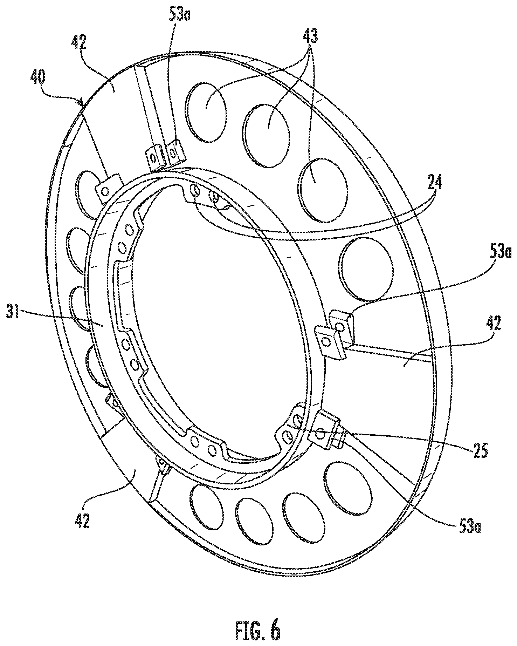

Referring additionally to FIG. 6, a disk **40** is coupled to the inner rim **31** and defines a closeable gap **41** with adjacent interior portions of the outer rim **33.** The disk **40** also includes weight-reduction openings **43** therein. The weight-reduction openings **43** each illustratively have a generally round or circular shape. The weight-reduction openings **43** may have another shape, such as oblong, hexagonal, and/or contoured for stress reduction, for example. Those skilled in the art will appreciate that having a reduced weight may increase the fuel efficiency of the vehicle **20** and/or may increase the lifespan of wheel assembly **30.**

The disk **40** also includes spaced apart thickened wall portions **42.** The spaced apart thickened wall portions **42** may be on both the inboard and outboard surfaces of the disk **40.** Each thickened wall portion **42** may provide increased strength or support as a coupling or attachment point, and/or to accept increased stresses thereat as will be described in further detail below. The thickened wall portions **42** may be provided by welding an additional metal body in position, for example, or they may be integrally formed with the disk **40.** Those skilled in the art will appreciate that the thickened wall portions **42** may be in the form of solid extensions (i.e., integrally formed with and/or a build-up of) of the disk **40,** and/or discrete bodies, for example, that function as mechanical stiffeners.

The inner rim **31,** outer rim **33,** and disk **40** may be formed of a high strength and rugged material, such as steel. As will be appreciated by those skilled in the art other materials may also be used.

Gas springs **50** are operatively coupled between the inner rim **31** and the outer rim **33.** Each gas spring **50** may be a double-acting gas spring, for example, and include a double-acting gas cylinder **51** and an associated piston **52.** Of course, in some embodiments, each gas spring **50** may be a single-acting gas spring. More than one type of gas spring may be used. The gas springs **50** may be air springs and/or nitrogen springs, for example. The gas springs **50** may include other gasses as well.

Illustratively, the gas springs **50** are arranged in pairs on opposite sides of the disk **40.** More particularly, the gas springs **50** diverge outwardly from the inner rim **31** to the outer rim **33.** A respective attachment bracket **53a** for each gas spring **50** is coupled to a respective thickened wall portion **42** of the disk **40,** for example, adjacent the inner rim **31.** Each attachment bracket **53a** may include a generally U-shaped or V-shaped base bracket that receives an end of the piston **52** therein (e.g., between the arm of the U- or V-shaped bracket). A fastener fastens the end of the piston **52** of the gas spring **50** to the base bracket and thus, each gas spring is coupled adjacent the respective thickened wall portion **42** of the disk **40** and adjacent the inner rim **31.** A similar attachment bracket **53b** is coupled to the outer rim **33** adjacent inboard and outboard surfaces. Accordingly, the gas springs **50** are pivotably coupled between the inner and outer rims **31, 33.**

As will be appreciated by those skilled in the art, the gas springs **50** provide a gas suspension for relative movement between the inner rim **31** and the outer rim **33.** The gas springs **50** have an operating stroke the permits the disk **40** to define a mechanical stop. In other words, the gas springs **50** maintain the outer rim **33** spaced apart from the inner rim **31.** However, if pressure on any gas spring **50** causes the gas spring to reach its limit under load or the gas spring fails, the disk **40** may act as a mechanical stop to limit relative movement between the inner and outer rims **31, 33.** In other words, the disk **40** and gas springs **50** may considered as providing a run-flat capability.

Initial charge pressures of the gas springs **50,** for example, when the gas springs are in the form of double-acting gas springs, will now be described, for example, with respect to initial pressures in the wheel assembly **30** when there are little or no external loads applied thereto (i.e., free-wheel). In particular, the chamber associated with the piston-side of the cylinder **51** is typically smaller (e.g., by about 10%) than the chamber associated with the full-bore side of the cylinder. Thus, when the piston **52** is centered within the cylinder **51** so that there is a relatively equal stroke in tension and compression, the piston-side chamber pressure is higher (e.g., by about 10%) than the full-bore side chamber pressure.

Thus, while equal pressure charging of the double-acting gas cylinder **51** may be convenient, it results in an offset piston **52,** which, in turn, results in an offset force to be applied to assemble the gas springs **50** within the wheel assembly **30.** To accomplish this, the inner and outer rims **31, 33** may be temporarily fixed in a rigid jig. However, using a rigid jig may make replacement of the gas springs **50** in the field increasingly difficult. Thus, to address increased ease of in-field replacement of the gas springs **50,** weld-on rings may be coupled to the inner and outer rims **31, 33** and to turnbuckles to temporarily lock the inner and outer rims in place. A similar arrangement may be used in-shop as well, as will be appreciated by those skilled in the art.

Accordingly, the result is a pre-stressed inner rim **31** suspension to the outer rim **33.** The pre-stressing may ensure that the lateral stops **44, 45** (described below) are not active or under pressure. With different charge pressures, the suspension can be pre-compressed. While tension suspension and compression suspension may be considered equivalent, tension suspension may be particularly advantageous over compression suspension, as will be appreciated by those skilled in the art.

Another assembly technique may include applying a higher charge pressure (e.g., about 10% more) at the piston-side to center the piston **52** at about the half-stroke position. This results in there being no initial load on the gas spring **50** at the wheel assembly **30** and facilitates assembly without the temporary fixing within a jig. Thus, the wheel assembly **30** may be considered to be neither pre-stressed, nor pre-compressed, but neutral. For example, a higher full-bore side chamber pressure may be applied (e.g., about 10% higher) than the piston side chamber pressure. Gas may be released from the full-bore side chamber until the piston **52** becomes centered relative to full-stroke. Alternatively, a higher piston-side chamber pressure may be applied (e.g., about 10% higher) than the full-bore side chamber pressure. Releasing gas from the cylinder **51** may be considered easier than surcharging, however, this may use more gas (e.g., nitrogen) than other approaches resulting in an increased cost.

The wheel assembly **30** also includes inboard lateral stops **44** carried by an inboard surface of the outer rim **33.** More particularly, the inboard lateral stops **44** are positioned adjacent the thickened wall portion **42.** The wheel assembly **30** also includes outboard lateral stops **45** carried by an outboard surface of the outer rim **33.** Similarly to the inboard lateral stops **44,** the outboard lateral stops **45** are adjacent the thickened wall portion **42.** Each thickened wall portion **42** is positioned between a pair of inboard and outboard lateral stops **44, 45.** The inboard and outboard lateral stops **44, 45** together with the outer rim **33** may conceptually be considered to be in the form of an L-shaped bracket. Illustratively, the inboard and outboard lateral stops **44, 45** each has a support plate **61** (e.g., having a rectangular shape) that is transverse to the outer rim 33 and has triangular side members **62.**

As will be appreciated by those skilled in the art, the inboard and outboard lateral stops **44, 45** cooperate to limit relative lateral movement of the disk **40** and the outer rim **33.** In other words, turning, for example, of the vehicle **20** may cause lateral movement of the disk **40** relative to the outer rim **33.** The inboard and outboard lateral stops **44, 45** may limit the amount of lateral movement of the disk **40** relative to the outer rim **33** to thereby maintain structural integrity of the wheel assembly **30.** Of course, the inboard and outboard lateral stops **44, 45** include other and/or additional components or elements that cooperate to limit relative lateral movement of the disk **40** and the outer rim **33.**

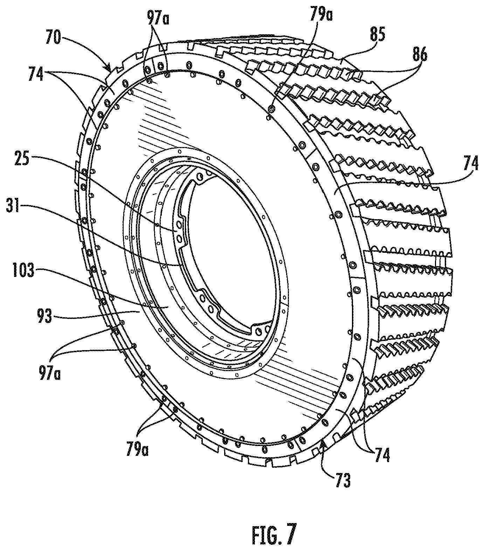

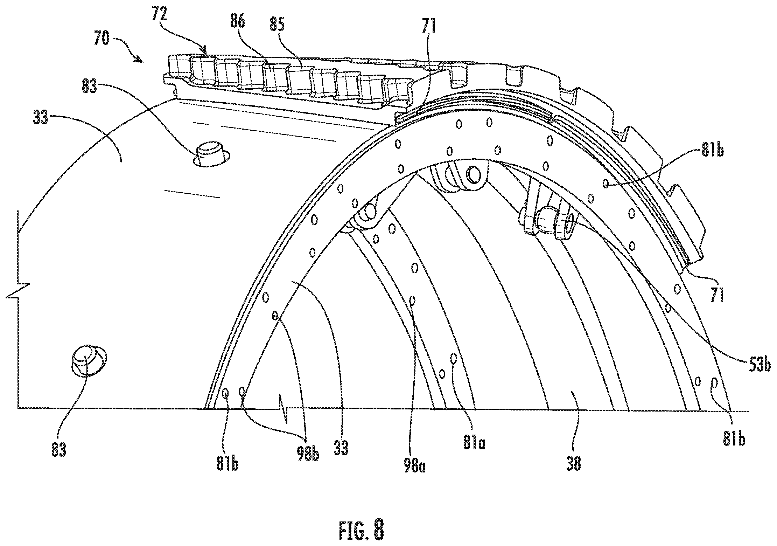

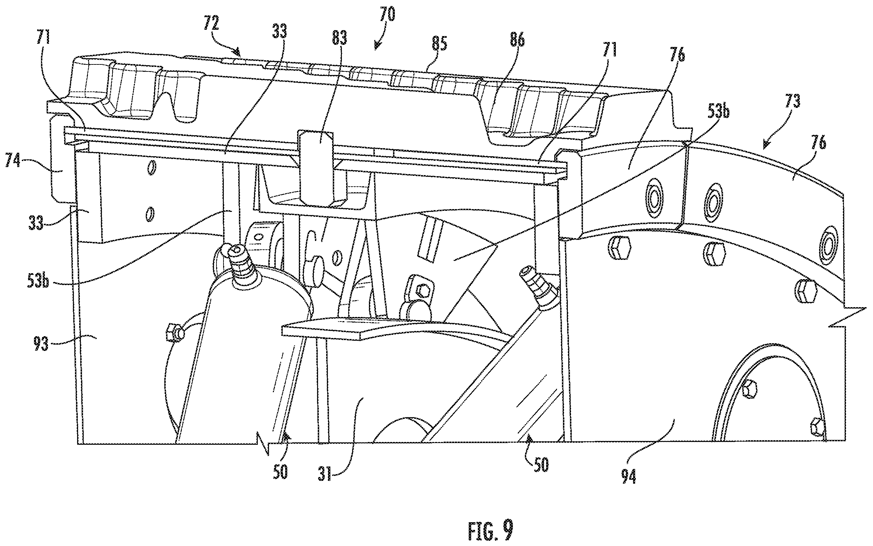

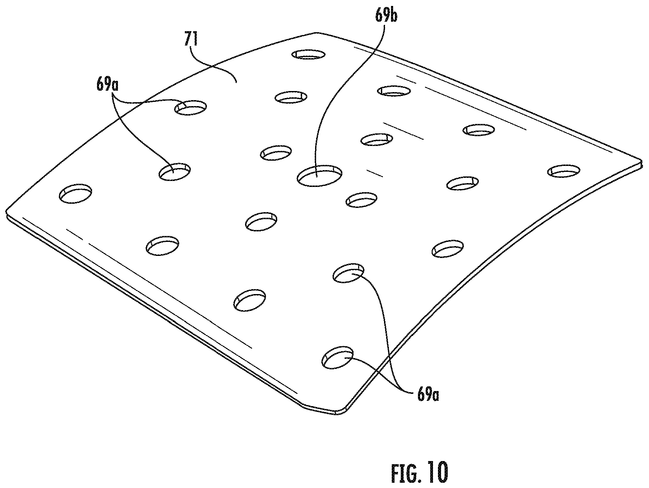

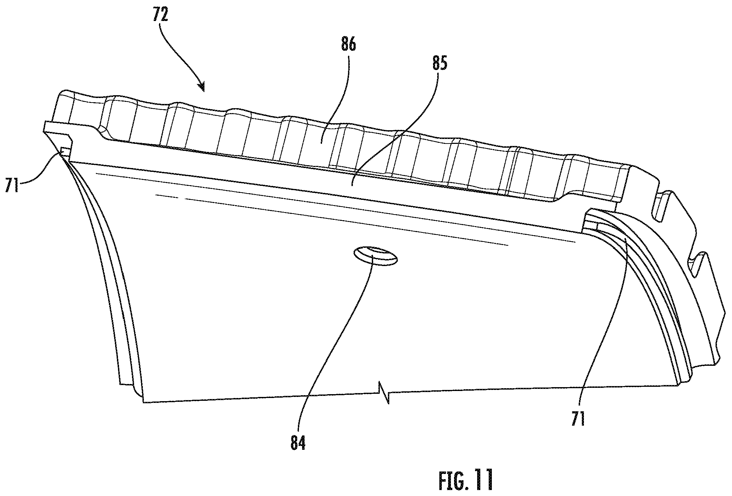

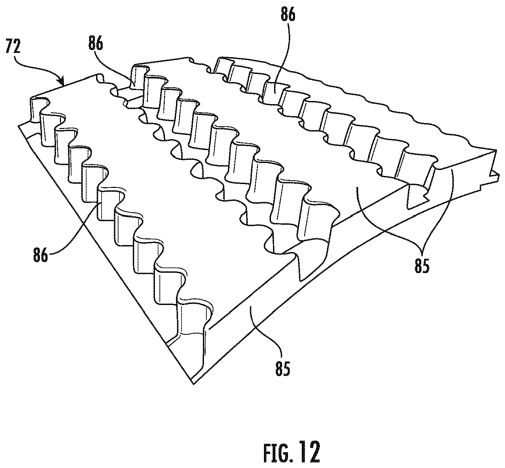

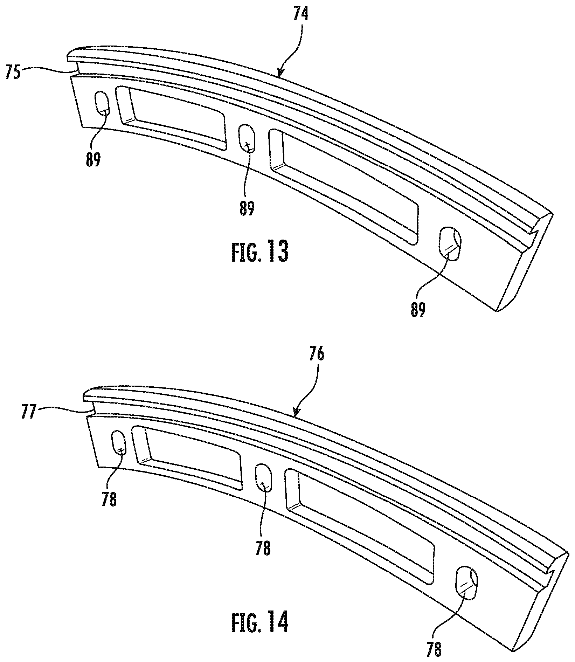

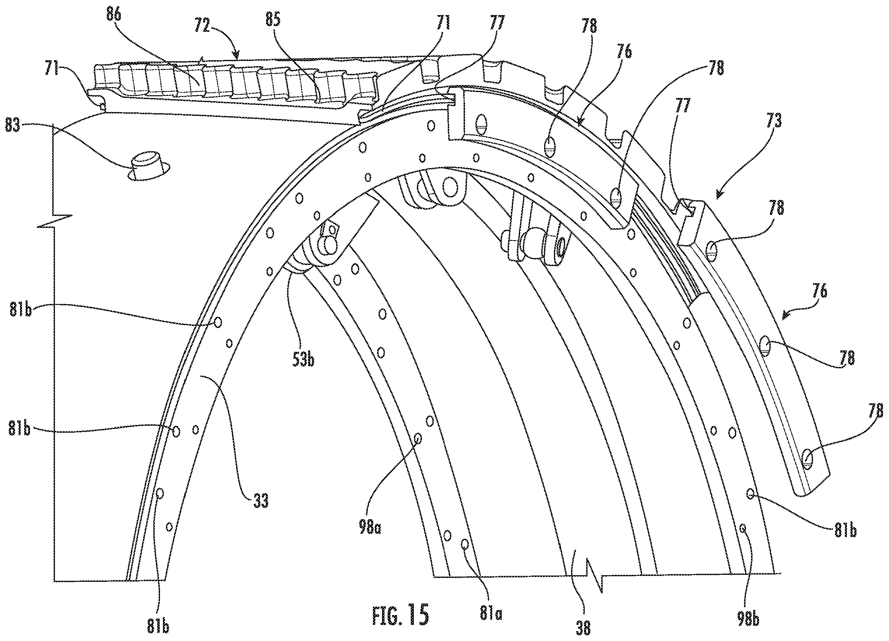

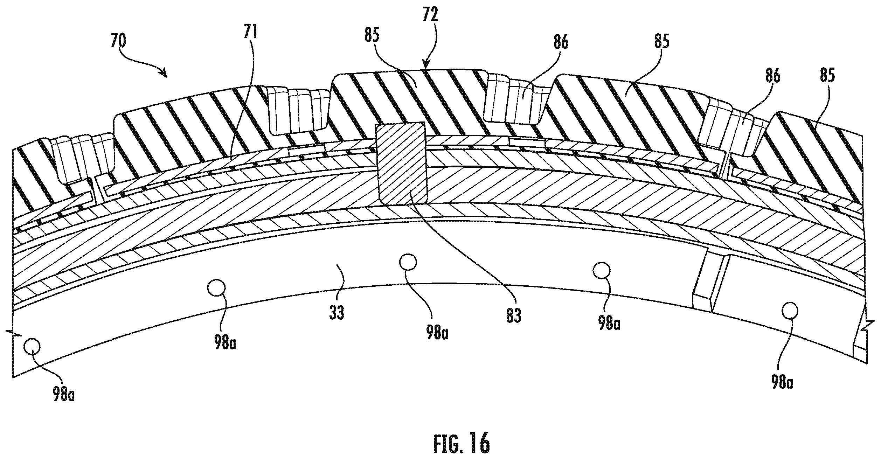

Referring now additionally to FIGS. 7-16, the wheel assembly **30** illustratively includes tread assemblies **70** carried by the outer rim **33.** Each tread assembly **70** includes a tread member support **71.** Each tread member support **71** may be in the form of an arcuate metal plate with openings **69a, 69b** therein (FIG. 10) and may couple to an outer circumference of the outer rim **33.** One or more of the tread member supports **71** may be a flat plate in other embodiments. A center one of the openings **69b** may receive a pin **83** therein as will be described in further detail below. In some embodiments, the tread member support **71** may not be metal, such as steel. Those skilled in the art will appreciate that given the arcuate shape of the tread member support **71,** several tread assemblies **70** are coupled in end-to-end relation around the outer rim **33.**

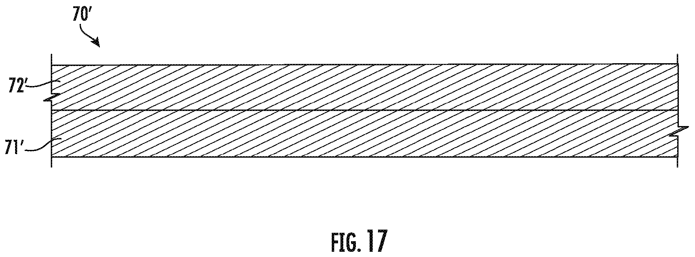

A tread member **72** is coupled or bonded, for example, glued, fastened, etc., to the tread member support **71,** and a clamping arrangement **73** removably securing the tread member support to the outer rim **33.** There may be more than one tread member **72** bonded to the tread member support **71.** The tread member **72** includes a resilient body **85** that has tread pattern **86** defined in an outer surface thereof. The resilient body **85** may include rubber or other material, which may be selected based upon desired friction, traction, or other characteristics, for example, based upon the use of the vehicle **20.** The material of the tread member **72** may a metal such as steel, in other embodiments. The tread pattern **86** may similarly be selected based upon desired traction or other characteristics, for example, based upon the use of the vehicle **20.** Moreover, referring briefly to FIG. 17, in another embodiment of a tread assembly **70',** each tread member **72'** and tread member support **71'** may include a common material integrally formed as a monolithic unit, which may or may not be metal, such as steel. In other words, each tread member **72'** and tread member support **71'** define a single unit or body of the same material (e.g., an all-metal tread member support and tread member).

Further details of the clamping arrangement **73** will now be described. The clamping arrangement **73** illustratively includes inboard clamping members **74** coupled to the inboard side of the outer rim **33.** The inboard clamping members **74** each have a first slotted recess **75** receiving adjacent portions of the tread member support **71.** The inboard clamping members **74** are removably coupled to the inboard side of the outer rim **33.** The inboard clamping members **74** are illustratively arranged in an end-to-end relation and each coupled to adjacent respective portions of the outer rim **33.** In some embodiments, the inboard clamping members **74** may be fixed, for example, welded or fixedly coupled, to the inboard side of the outer rim **33** and/or a single inboard clamping member may be used.

The inboard clamping members **74** are coupled to the inboard side of the outer rim **33** by way of fasteners **79a,** for example, threaded fasteners to facilitate removal and replacement, for example, when tread members **72** wear or it is desirable to replace the tread members. The threaded fasteners **79a** may extend through openings **89** in the inboard clamping members **74** and engage corresponding threaded openings **81a** in the outer rim **33.**

The clamping arrangement **73** also illustratively includes outboard clamping members **76** coupled to the outboard side of the outer rim **33.** Similar to the inboard clamping member **74,** the outboard clamping members **76** each has a second slotted recess **77** therein receiving adjacent portions of the tread member support **71.** The outboard clamping members **76** are removably coupled to the outboard side of the outer rim **33.** The outboard clamping members **76** are illustratively arranged in an end-to-end relation and each coupled to adjacent respective portions of the outer rim **33.** In some embodiments, a single outboard clamping member **76** may be coupled to the outboard side of the outer rim **33** and extend the circumference of the outer rim.

The outboard clamping members **76** are coupled to the outboard side of the outer rim **33** by way of fasteners, for example, threaded fasteners to facilitate removal and replacement, for example, when tread members **72** wear, or it is desirable to replace the tread members. The threaded fasteners may extend through openings **78** in the outboard clamping members **76** and engage corresponding threaded openings **81b** in the outer rim **33.**

The tread member support **71** and adjacent portions of the outer rim **33** (e.g., along the outer circumference) define a retaining feature therebetween. The retaining feature is illustratively in the form of or includes a pin **83** carried by the outer rim **33** and a pin-receiving opening **84** in the tread member support **71.** The pin **83** and the pin-receiving opening **84** may advantageously prevent relative movement between the tread member support **71** and the outer rim **33,** and also facilitate replacement (e.g., easy alignment) of the tread members **72,** for example, thereby reducing downtime of the vehicle **20.**

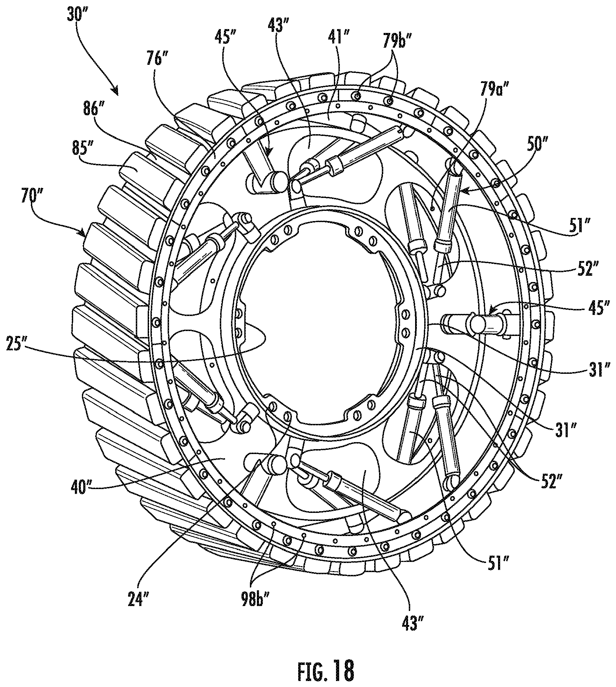

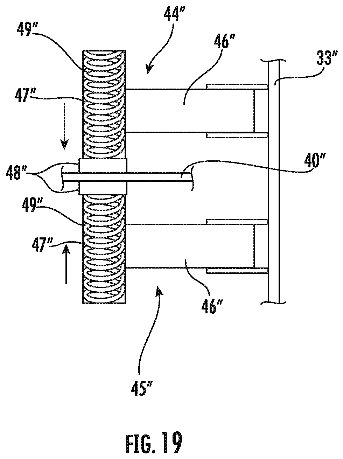

Referring now briefly to FIGS. 18 and 19, in another embodiment, the inboard and outboard lateral stops **44", 45"** are biased toward the disk **40".** More particularly, the inboard and outboard lateral stops **44", 45"** each includes an arm **46"** extending radially inward from the inboard and outboard interior surfaces of the outer rim **33".** A transverse arm **47"** is coupled to an end of each arm **46".** Each transverse arm **47"** carries a plug **48"** that is biased toward the disk **40"** by a biasing member **49",** for example, a spring, such as a coil spring. Other biasing arrangements may be used. Elements labeled **24", 25", 30", 31"**, **41", 43", 45", 50", 51", 52", 70", 76", 79a", 79b", 85", 86"**, and **98b"** are similar to those respectively numbered elements described above without double prime notation.

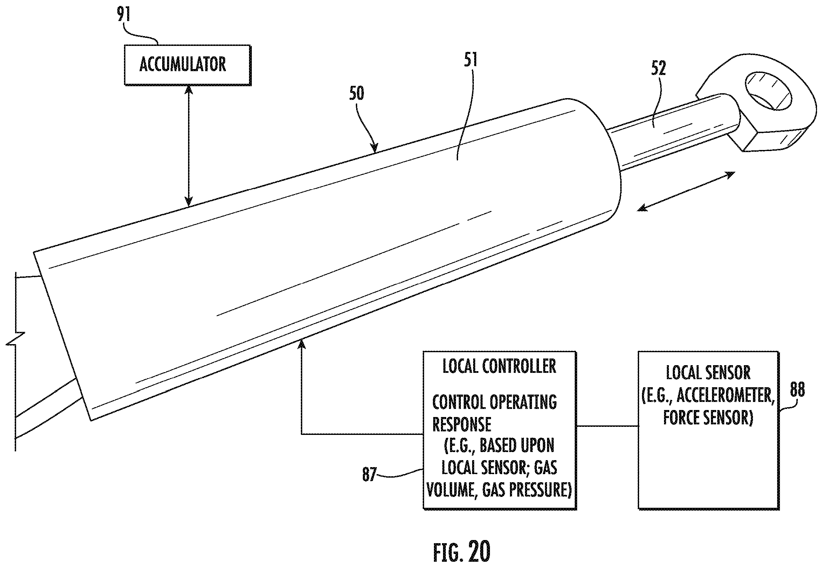

Referring now additionally to FIG. 20, one or more of the gas springs **50** may have a controllable response. For example, the gas springs **50** may have either or both of a controllable gas pressure and a controllable gas volume. Any number of the gas springs **50** may have a controllable response. By having a controllable response, each of the gas springs **50** may be operated or controlled as will be explained in further detail below, for example, with respect to certain operating conditions and/or environments. More particularly, the wheel assembly **30** may include a local controller **87** (e.g., including a processor and/or circuitry) that is coupled to the gas springs **50.** The local controller **87** may be coupled to any number of gas springs **50.** The local controller **87** may be carried within the outer rim **33,** for example, inside the outer rim, or by the disk **40.** The local controller **87** may be carried by other elements of the wheel assembly **30.** The local controller **87** may also include respective actuators and/or valves to control the response of the gas springs **50** and cooperate with an accumulator **91** also coupled to the gas springs to act as a pressure and/or volume storage reservoir for gas springs.

The wheel assembly **30** may also include a local sensor **88** coupled to the local controller **87.** The local controller **87** may control (e.g., monitor and/or adjust) the operating response of the gas springs **50** based upon the local sensor **88.** For example, the local controller **87** may adjust the pressure or volume of the gas springs **50** without controlling the operation (e.g., extend/retract) of the gas springs. The local controller **87** may also adjust, for example, alternatively or additionally, the operation (e.g., extend/retract) of the gas springs **50.**

The local sensor **88** may be an acceleration sensor, for example, and cooperate with the local controller **87** to control the controllable response of the gas springs **50** based upon a sensed acceleration (e.g., braking, turning, etc.). The local sensor **88** may be another type of sensor, for example, a force sensor. There may be more than one local sensor **88.** In some embodiments, the local controller **87** may cooperate with the local sensor **88** to generate a notification, for example, when a sensed value exceeds a threshold. The notification may be communicate within the vehicle **20** (e.g., in the cab) or remotely from the vehicle. In other words, the local controller **87** may cooperate with the local sensor **88** independently from or without controlling the operating response of the gas springs **50.**

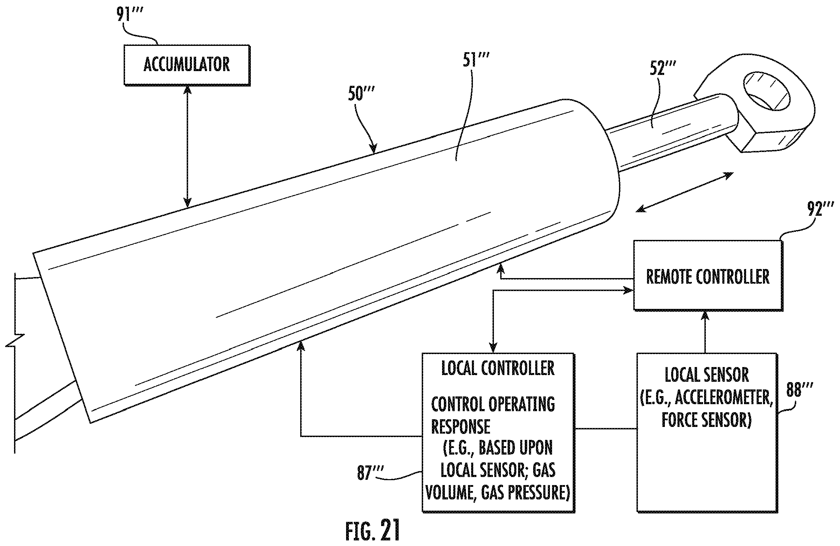

Referring now briefly to FIG. 21, in another embodiment, a remote controller **92‴** may be carried remote from the wheel assembly **30,** for example, within a wheel well of the vehicle **20** or within the truck cab. The remote controller **92‴** may cooperate with the local sensor **88‴** or other sensor, for example, remote from the wheel assembly **30.** The remote controller **92‴** may also cooperate with the local controller **87‴** to effectuate a change in the operating response of the gas springs **50‴.** Wiring from the remote controller **92‴** may extend to the local controller **87‴,** and/or the remote controller may wirelessly communicate with the local controller. Elements labeled **51‴, 52‴,** and **91‴,** are similar to those respectively numbered elements described above without triple prime notation.

Those skilled in the art will appreciate that the local controller **87** controls the operating response of the gas springs **50** while the wheel assembly **30** is rolling. For example, if the vehicle **20,** during motion thereof, makes a relatively sharp turn or applies the brakes, the local controller **87** may independently control the operating response of each or selected ones of the gas springs **50** based upon the turn or braking (e.g., increase pressures in the gas springs of front wheel assemblies). Other motion of the vehicle **20** may cause changes in the operating response, such as, for example, failure of any of the gas springs **50,** debris in the tread members **72,** and/or contact of the disk **40** with the outer rim **33.**

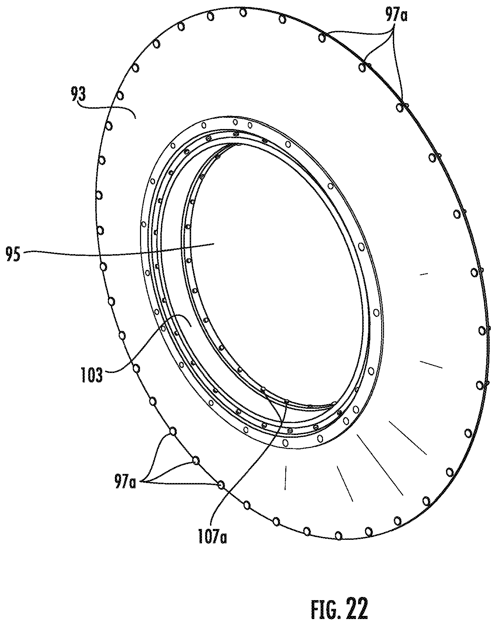

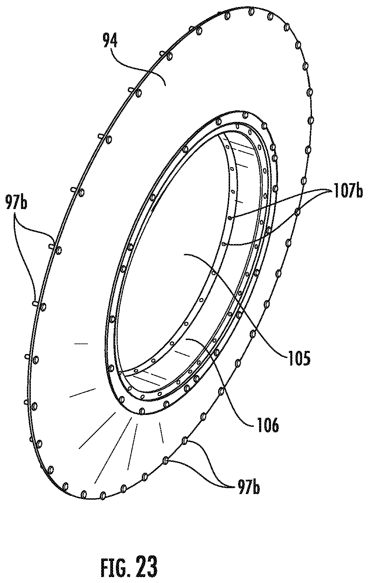

Referring now additionally to FIGS. 22 and 23, the wheel assembly **30** may include inboard and outboard removable sidewalls **93, 94.** The inboard and outboard removable sidewalls **93, 94** are each illustratively in the form of a round or circular cover carried by the outer rim **33.** More particularly, the inboard and outboard removable sidewalls **93, 94** each has an opening **95, 105** therein to permit, for example, coupling of the wheel assembly **30** to the hub **21.** Respective flanges **103, 106** extend inwardly within the openings **95, 105.** The inboard and outboard removable sidewalls **93, 94** may each be coupled to the inboard and outboard sides of the outer rim **33** by way of fasteners **97a, 97b** and to the inner rim **31** also by way of fasteners **107a, 107b.** The fasteners **97a, 97b** may be received through fastener receiving passageways along the outer circumference of each of the inboard and outboard removable sidewalls **93, 94** and fasten to corresponding respective aligned threaded passageways **98a, 98b** in the outer rim **33.** The threaded passageways **98a, 98b** in the outer rim **33** form a second, inner row of threaded passageways, with the outer row of threaded passageways **81a, 81b** for securing the clamping arrangement **73** to the outer rim with fasteners **79a** (FIG. 7).

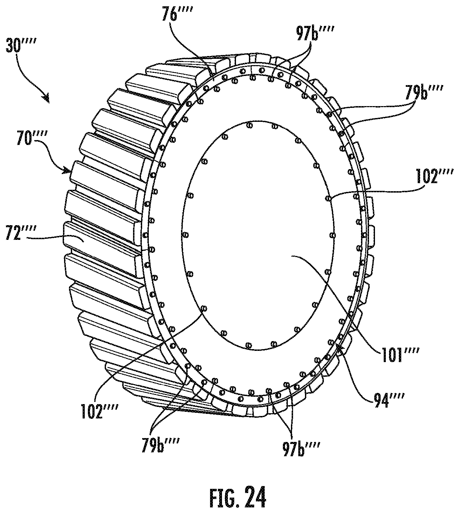

Referring now to FIG. 24, in another embodiment, the outboard removable sidewall **94ʺʺ** may have a removable inner panel **101ʺʺ** that when removed, by way of respective fasteners **102ʺʺ,** permit access to inner interior of the wheel assembly **30ʺʺ,** for example, the inner rim. Similar to the outboard removable sidewall described above, the outboard sidewall **94ʺʺ** couples by way of fasteners **97bʺʺ** to the outer rim inside of or adjacent the outboard clamping members **76""** (which are secured to the outer rim also by way of fasteners **79b""**). Elements labeled **51ʺʺ, 52ʺʺ, 91ʺʺ, 70ʺʺ** and **72ʺʺ** are similar to those respectively numbered elements described above without quadruple prime notation.

As will be appreciated by those skilled in the art, the inboard and outboard removable sidewalls **93, 94** may be particularly advantageous for reducing the amount of dust and/or debris within the interior of the wheel assembly **30,** for example, between the inner and outer rims **31, 33.** Accordingly, elements of the wheel assembly **30,** for example, the disk **40** and gas springs **50,** may have increased protection against damage, for example, from environmental elements (e.g., rocks, dust, dirt, water, etc.), and thus may have a longer service life. In some embodiments, the wheel assembly **30** may not include the inboard and outboard removable sidewalls **93, 94.**

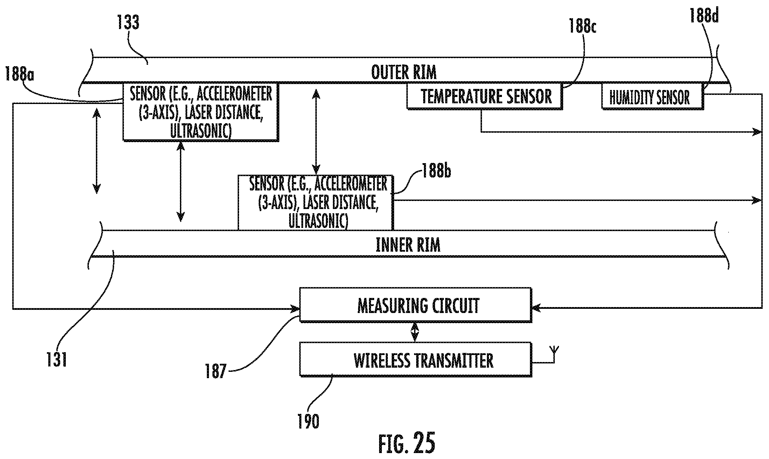

Referring now to FIG. 25, in another embodiment, sensors **188a, 188b** sense relative movement, such as by sensing a distance between the inner rim **131** and the outer rim **133.** More particularly, the sensors **188a, 188b** may be in the form of three-axis accelerometers. Of course, the sensors **188a, 188b** may be other types of sensors, for example, laser distance sensors, ultrasonic sensors, linear variable differential transformer (LVDT) sensors, and/or other contact or non-contact displacement sensors.

When the sensors **188a, 188b** are in the form of three-axis accelerometers, one of the accelerometers is carried by the inner rim **131** defining an inner accelerometer, while another accelerometer is carried by the outer rim **133** defining an outer accelerometer. The inner and outer accelerometers **188a, 188b** are aligned by way of their axes so that relative movement between the inner and outer rims **131, 133** as a sensed acceleration can be translated, for example, by way of a distance measuring circuit **187** coupled to the accelerometers **188a, 188b** (e.g., integrating each acceleration).

The sensors **188a, 188b** may each be different from one another. For example, an ultrasonic sensor may be used with the inner and outer accelerometers **188a, 188b** to sense or measure displacement (e.g., tangential to the inner and outer accelerometers). Of course, a laser distance sensor may be used as an alternative to the ultrasonic sensor or in conjunction with the ultrasonic sensor and/or the inner and outer accelerometers **188a, 188b.** The measuring circuit **187** may be carried by the wheel assembly, the vehicle, or remote from the vehicle.

A temperature sensor **188c** may be carried by the outer rim **133** (e.g., within or on an inner surface of the outer rim) and coupled to the measuring circuit **187** to sense a temperature within the wheel assembly, for example, when a cover or inboard or outboard removable sidewalls are used. A humidity sensor **188d** may alternatively or additionally be carried by the outer rim **133** (e.g., within or on an inner surface of the outer rim) and coupled to the measuring circuit **187** to sense humidity within the wheel assembly, for example, when a cover or inboard or outboard removable sidewalls are used. Data representing the humidity, acceleration or distance data (e.g., raw data or processed), and/or temperature may be remotely communicated from the wheel assembly or vehicle via a wireless transmitter **190** coupled to the measuring circuit **187** for downstream processing.

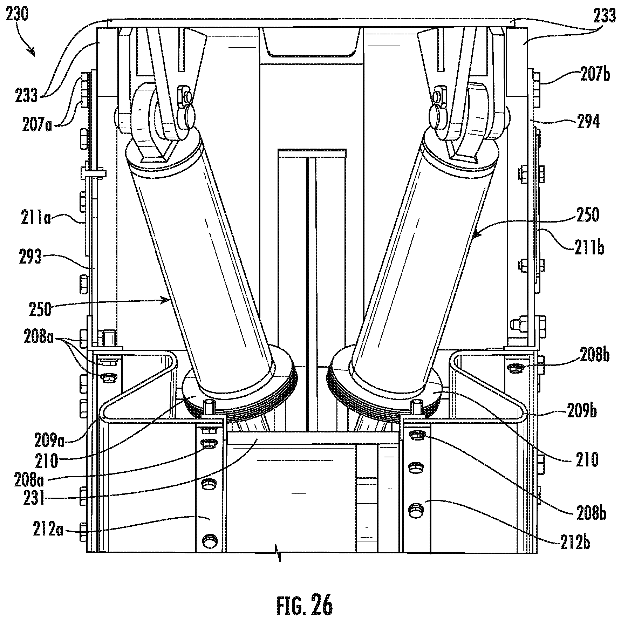

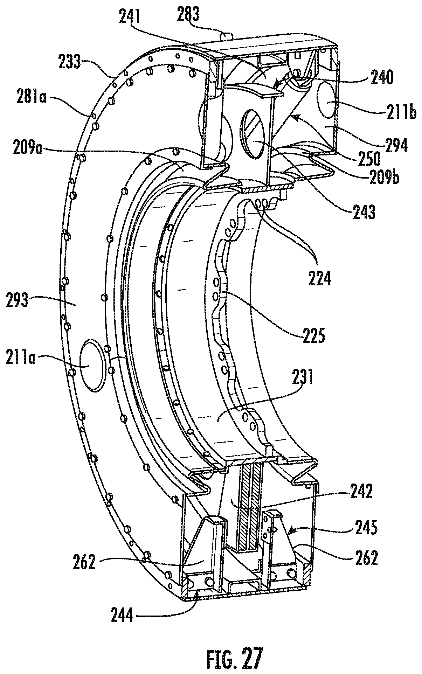

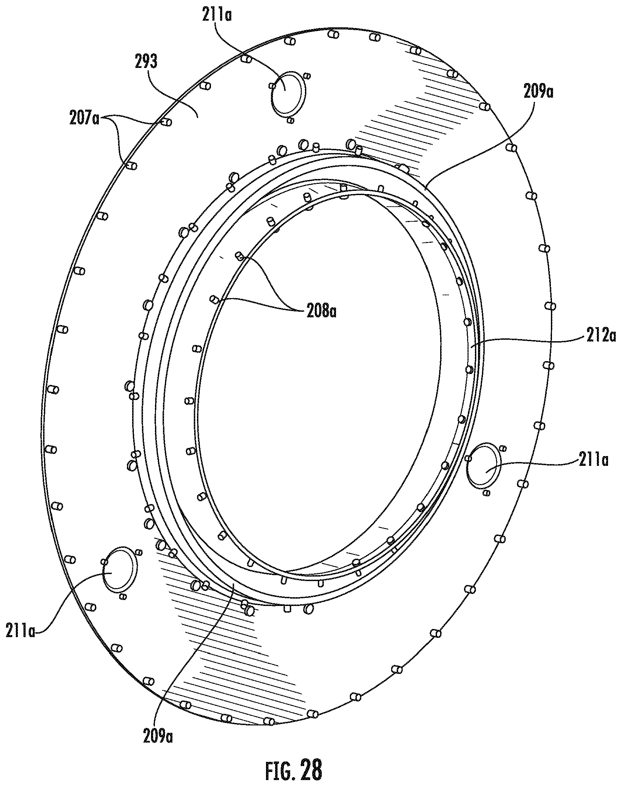

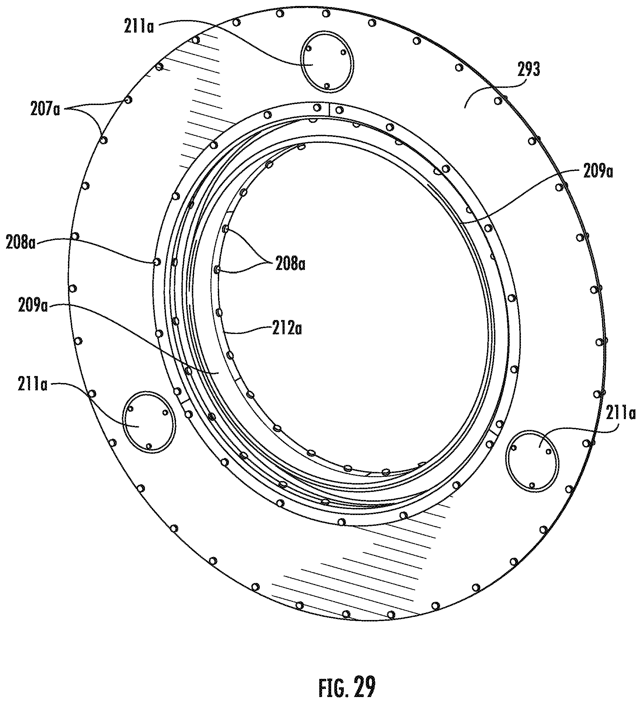

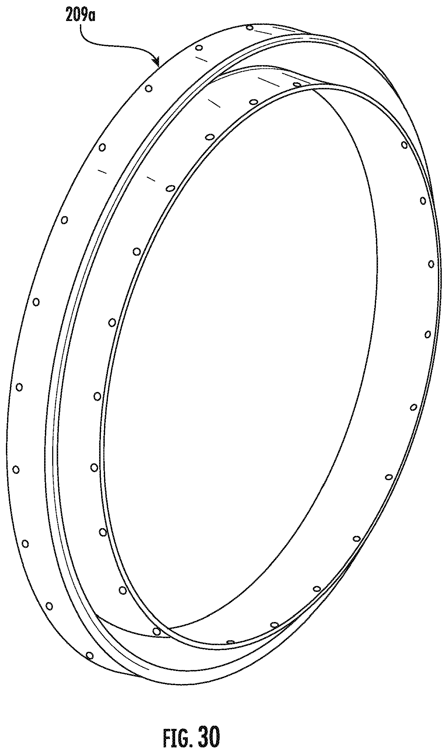

Referring now to FIGS. 26-31, in another embodiment, the wheel assembly **230** includes a rigid inboard cover ring **293** coupled to an inboard side of the outer rim **233,** for example, by way of fasteners **207a.** The rigid inboard cover ring **293** extends radially inward toward the inner rim **231.** More particularly, the rigid inboard cover ring **293** defines a radially and axially extending inboard gap with the inner rim **231.** A flexible inboard seal **209a,** for example, in the form of an inboard bellows seal, is coupled between the rigid inboard cover ring **293** and the inner rim **231,** for example, by way of respective fasteners **208a** to couple to the inner rim (e.g., used with a clamping arrangement **212a,** such as, for example, metal banding or other material). The flexible inboard seal **209a** closes the radially and axially extending inboard gap and permits relative movement between the inner rim **231** and the outer rim **233.** Illustratively, the inboard bellows seal **209a** has a Z-shaped cross-section. The flexible inboard seal **209a** may be a different kind of flexible seal, for example, and may have a different shaped cross-section. The flexible inboard seal **209a** may include rubber and/or an elastomeric material. The flexible inboard seal **209a** may include other and/or additional materials.

The wheel assembly **230** also includes a rigid outboard cover ring **294** coupled to an outboard side of the outer rim **233,** for example by way of fasteners **207b.** The rigid outboard cover ring **294** extends radially inward toward the inner rim **231.** More particularly, the rigid outboard cover ring **294** defines a radially and axially extending outboard gap with the inner rim **231.** A flexible outboard seal **209b,** for example, in the form of an outboard bellows seal, is coupled between the rigid outboard cover ring **294** and the inner rim **231,** for example, by way of respective fasteners **208b** (and respective clamping arrangement **212b,** for example). The flexible inboard seal **209b** closes the radially and axially extending outboard gap and permits relative movement between the inner rim **231** and the outer rim **233.** Illustratively, the outboard bellows seal **209a** has a Z-shaped cross-section. The flexible outboard seal **209b** may be a different kind of flexible seal, for example, and may have a different shaped cross-section.

Still further, a respective pleated cover **210** (e.g., bellows), is coupled to each of the gas springs **250.** In particular, the pleated covers **210** cover the piston so that dust, dirt, and/or debris may be kept from the piston (FIG. 26). A reduced amount of dust, dirt, and/or debris in contact with the piston may increase the operational lifespan of the gas springs **250,** as will be appreciated by those skilled in the art.

The flexible outboard seal **209b** may include rubber and/or an elastomeric material. The flexible outboard seal **209b** may include other and/or additional materials. A rigid outboard cover ring **294** and a flexible outboard seal **209b** may not be used in some embodiments. Elements labeled **224, 225, 240, 241, 242, 243, 244, 245, 262, 281a** and **283** are similar to respective elements labeled **24, 25, 40, 41, 42, 43, 44, 45, 62, 81a** and **83** (i.e. decremented by 200) described above.

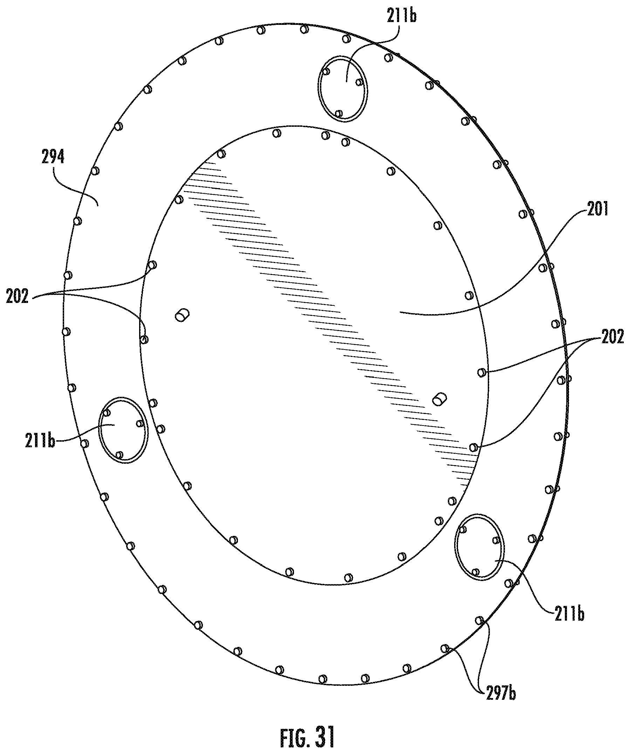

Referring now particularly to FIG. 31, similar to the embodiments described above with respect to FIGS. 22-24, a rigid removable inset panel or inner panel **201** may be carried within the rigid outboard cover ring **294** (e.g., secured to the wheel assembly by way of fasteners **297b)** so that when removed, by way of respective fasteners **202,** permits access to inner interior of the wheel assembly **230,** for example, the inner rim. Access ports or removable covers **211a** are spaced apart within the rigid outboard cover ring **294.** The removable covers **211a** may be clear acrylic, for example, to permit visual inspection within the wheel assembly without removing the rigid removable inset panel **201** and/or to permit ease of access to sensors, controller, and/or other circuitry, for example, as described above. A similar arrangement including the access ports or removable covers **211b** may be used as the rigid inboard cover ring **294,** for example, as described above (FIGS. 26-27). The access ports **211a, 211b** may be not used in all embodiments.

The embodiments of the wheel assembly **30** described herein may be particularly advantageous with respect to a conventional pneumatic tire, for example, particularly on a relatively large vehicle (e.g., heavy machinery). A conventional pneumatic tire, for example, for heavy machinery has a relatively high cost and, in some environments, may have a relatively short usage life. Moreover, particularly with heavy machinery, a failure of a conventional tire may cause be associated with an increased chance of damage to the heavy machinery. Even still further, a failure of a conventional tire may cause the vehicle **20** to be inoperable or out of service for a relatively long time period, thus resulting in a financial loss and loss of productivity, particularly for certain types of vehicles or heavy machinery that operate around the clock.

The wheel assembly **30** may address these shortcomings of a conventional tire. More particularly, the wheel assembly **30** may have a lower operational cost with increased performance (e.g., by way of the controllable operating response of the gas springs **50).** Additionally, the wheel assembly **30** may be field serviceable, meaning that tread members **72** may be replaced in the field. Repairs, for example, in the case of failed gas springs **50,** may also be repaired in the field.

A method aspect is directed to a method of making a wheel assembly **30** to be coupled to a hub **21** of a vehicle **20.** The method includes operatively coupling a plurality of gas springs **50** between an inner rim **31** to be coupled to the hub **21** of the vehicle **20** and an outer rim **33** surrounding the inner rim. The method also includes mounting a plurality of tread assemblies **70** to the outer rim **33.** Each tread assembly **70** may be mounted by bonding at least one tread member **72** to a tread member support **71** and positioning a clamping arrangement **73** to removably secure the tread member support to the outer rim **33.**

Another method aspect is directed to a method of making wheel assembly **30** to be coupled to a hub **21** of a vehicle **20.** The method includes operatively coupling a plurality of gas springs **50** between an inner rim **31** to be coupled to the hub **21** of the vehicle **20** and an outer rim **33** surrounding the inner rim **31** to provide a gas suspension for relative movement between the inner rim and the outer rim. The method also includes coupling a disk **40** to the inner rim **31** that defines a closeable gap **41** with adjacent interior portions of the outer rim **33** to define a mechanical stop to limit relative movement between the inner rim and outer rim.

Another method aspect is directed to a method of making a wheel assembly **30** to be coupled to a hub **21** of a vehicle **20.** The method includes operatively coupling a plurality of gas springs **50** operatively between an inner rim **31** to be coupled to the hub **21** of a vehicle **20** and an outer rim **33** surrounding the inner rim to provide a gas suspension for relative movement between the inner rim and the outer rim. The method also includes coupling a disk **40** coupled to the inner rim **31** and defining a closeable gap **41** with adjacent interior portions of the outer rim **33.** The method may further include positioning a plurality of inboard lateral stops **44** carried by an inboard interior surface of the outer rim **33,** and positioning plurality of outboard lateral stops **45** carried by outboard interior surface of the outer rim so that the plurality of inboard lateral stops and plurality of outboard lateral stops cooperate to limit relative lateral movement of the disk **40** and the outer rim.

Another method aspect is directed to a method of making a wheel assembly **30** to be coupled to a hub **21** of a vehicle **20.** The method includes operatively coupling a plurality of gas springs **50** between an inner rim **31** to be coupled to the hub **21** of the vehicle **20** and an outer rim **33** surrounding the inner rim. At least one gas spring **50** from among the plurality thereof has a controllable operating response. The method also includes coupling a local controller **87** to the at least one gas spring **50** to control the operating response of the at least one gas spring.

Another related method aspect is directed to a method of operating a wheel assembly **30** to be coupled to a hub **21** of a vehicle **20.** The wheel assembly **30** includes an inner rim 31 to be coupled to the hub **21** of the vehicle **20,** an outer rim **33** surrounding the inner rim, and a plurality of gas springs **50** operatively coupled between the inner rim and the outer rim. At least one gas spring **50** from among the plurality thereof has a controllable operating response. The method includes operating a local controller **87** coupled to the at least one gas spring **50** to control the operating response of the at least one gas spring.

Another method aspect is directed to a method of sensing relative movement, e.g. a distance, between an inner rim **131** of a wheel assembly **30** to be coupled to a hub **21** of a vehicle **20** and an outer rim **133** of the wheel assembly. The inner rim **131** is to be coupled to the hub **21** of a vehicle **20** and the outer rim **133** surrounding the inner rim. The wheel assembly **30** includes a plurality of gas springs **50** operatively coupled between the inner rim **131** and the outer rim **133** and permitting relative movement therebetween. The method includes using at least one sensor **188a,** 188b to sense the relative movement between the inner and outer rims **131, 133** during operation or rolling of the wheel assembly.

Another method aspect is directed to a method of making a wheel assembly **30** to be coupled to a hub **21** of a vehicle **20.** The method includes coupling an inner rim **231** to be to the hub **21** of the vehicle **20** and positioning an outer rim **233** surrounding the inner rim. The method also includes operatively coupling a plurality of gas springs **50** between the inner rim **231** and the outer rim **233** to permit relative movement therebetween. The method further includes coupling a rigid inboard cover ring **293** to an inboard side of the outer rim **233** and extending radially inward toward the inner rim **231** and coupling a flexible inboard seal **209a** between the rigid inboard cover ring and the inner rim.

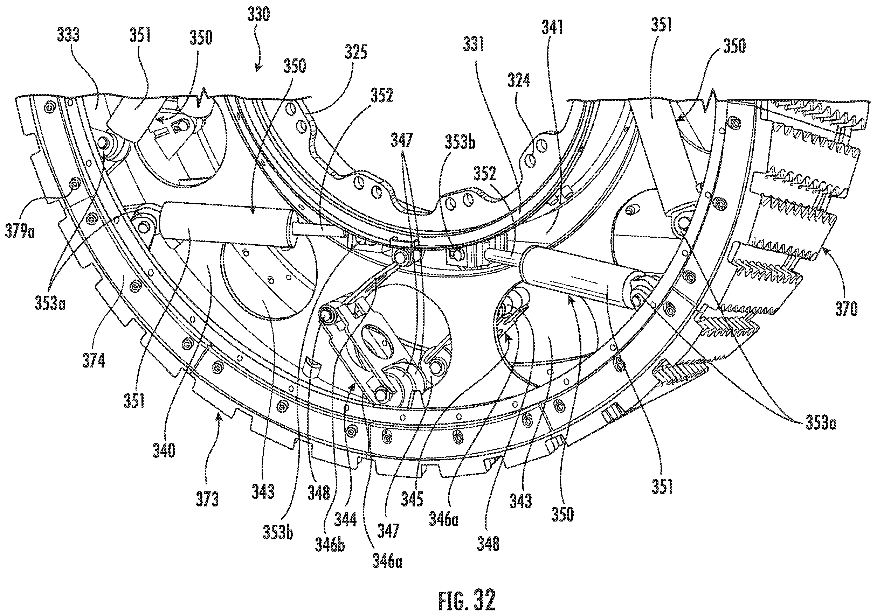

Referring now to FIG. 32, in another embodiment of the wheel assembly 330, an outer ring **340** or disk is coupled to the outer rim **333.** This is in contrast to embodiments described above where the ring or disk **40** is coupled to the inner rim **331.** In the present embodiments, the outer ring **340** being coupled to the outer rim **333** defines a closeable gap **341** with adjacent interior portions of the inner rim **331** to define a mechanical stop to limit relative movement of the inner and outer rims. Similarly to the embodiments described above, the outer rim **333** may have a diameter of at least 3.5 feet.

Similarly to the embodiments above, the outer ring **340** also includes weight-reduction openings **343** therein. The weight-reduction openings **343** each illustratively have a generally round or circular shape. The weight-reduction openings **343** may have another shape, such as oblong, hexagonal, and/or contoured for stress reduction, for example.

Gas springs **350** are operatively coupled between the inner rim **331** and the outer rim **333.** Each gas spring **350** may be a double-acting gas spring, for example, and include a double-acting gas cylinder **351** and an associated piston **352.** Of course, in some embodiments, each gas spring **350** may be a single-acting gas spring. More than one type of gas spring **350** may be used. The gas springs **350** may be air springs and/or nitrogen springs, for example. The gas springs **350** may include other gasses as well.

Illustratively, the gas springs **350** are arranged in pairs on opposite sides of the outer ring **340.** More particularly, the gas springs **350** diverge outwardly from the inner rim **331** to the outer rim **333.** A respective attachment bracket **353** for each gas spring **350** is coupled to the inner rim **331.** Each attachment bracket **353** may include a generally U-shaped or V-shaped base bracket that receives an end of the piston **352** therein (e.g., between the arm of the U- or V-shaped bracket). A fastener fastens the end of the piston **352** of the gas spring **350** to the base bracket **353.** A similar attachment bracket **353** is coupled to the outer rim **333** adjacent inboard and outboard surfaces. Accordingly, the gas springs **350** are pivotably coupled between the inner and outer rims **331, 333.**

Similar to the embodiments described above, as will be appreciated by those skilled in the art, the gas springs **350** provide a gas suspension for relative movement between the inner rim **331** and the outer rim **333.** The gas springs **350** have an operating stroke the permits the outer ring **340** to define a mechanical stop. In other words, the gas springs **350** maintain the outer rim **333** spaced apart from the inner rim **331.** However, if pressure on any gas spring **350** causes the gas spring to reach its limit under load or the gas spring fails, the outer ring **340** may act as a mechanical stop to limit relative movement between the inner and outer rims **331, 333.** In other words, the outer ring **340** and gas springs **350** may be considered as providing a run-flat capability. Since the gas springs **350** are similar to the gas springs described with respect to the embodiments above, further details of the gas springs need not be described.

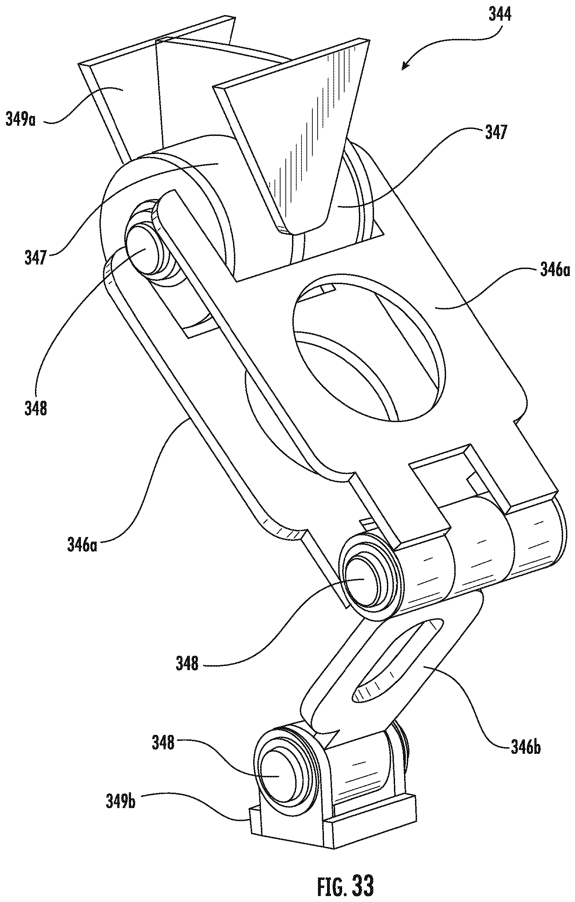

Referring additionally to FIG. 33, the wheel assembly **330** also includes inboard lateral stops **344** coupled between an inboard side of the outer rim **333** and an inboard side of the inner rim **331.** More particularly, the inboard lateral stops **344** are illustratively in the form of hinge retainers or scissor hinges. Each inboard lateral stop **344** includes inboard hinge brackets **346a, 346b** and inboard elastomeric bodies **347,** for example, urethane bodies, carried by the hinge bracket adjacent the outer rim **333.** More particularly, the inboard elastomeric bodies **347** couple to an outer lateral stop mounting bracket **349a** that is coupled to the outer rim **333.** The inboard hinge brackets **346a, 346b** are coupled by way of a hinge pin **348.** In some embodiments, an outer lateral stop mounting bracket **349a** may not be used as the inboard elastomeric bodies **347** may couple, for example, directly, to the outer ring **340,** for example, by way of a hinge pin **348.** The hinge bracket **346b** is coupled to the inner rim **331** by way of an inner lateral stop mounting bracket **349b** coupled to the inner rim by a hinge pin **348** coupled to the inner lateral stop mounting bracket. In some embodiments, the hinge bracket **346b** may couple to the inner rim **331** without an inner lateral stop mounting bracket **349b,** for example, directly to the inner rim by way of a hinge pin **348.**

The wheel assembly **330** also includes outboard lateral stops **345** coupled between an outboard side of the outer rim **333** and an outboard side of the inner rim 331. More particularly, the outboard lateral stops **345** are illustratively in the form of hinge retainers or scissor hinges that are similar to the inboard lateral stops **344.** That is, each outboard lateral stop **345** includes outboard hinge brackets **346a, 346b** and outboard elastomeric bodies **347,** for example, urethane bodies, carried by the hinge bracket adjacent the outer rim **333.** More particularly, the outboard elastomeric bodies **347** couple to an outer lateral stop mounting bracket **349a** that is coupled to the outer rim **333.** The hinge brackets **346a, 346b** are coupled by way of a hinge pin **348.** In some embodiments, an outer lateral stop mounting bracket **349a** may not be used as the outboard elastomeric bodies **347** may couple, for example, directly, to the outer ring **340,** for example, by way of a hinge pin **348.** The hinge bracket **346b** is coupled to the inner rim **331** by way of an inner lateral stop mounting bracket **349b** coupled to the inner rim by a hinge pin **348** coupled to the inner lateral stop mounting bracket. In some embodiments, the hinge bracket **346b** may couple to the inner rim **331** without an inner lateral stop mounting bracket **349b,** for example, directly to the inner rim by way of a hinge pin **348.**

Those skilled in the art will appreciate that the inboard and outboard lateral stops **344, 345,** similarly to the lateral stops described with respect to the embodiments above, limit relative movement between the outer rim **333** (and thus the outer ring **340)** and the inner rim **331.** In other words, turning, for example, of the vehicle may cause lateral movement of the outer ring **340** relative to the inner rim **331.** The inboard and outboard lateral stops **344, 345** may limit the amount of lateral movement of the outer ring **340** relative to the inner rim **331** to thereby maintain structural integrity of the wheel assembly **330.** Of course, the inboard and outboard lateral stops **344, 345** may include other and/or additional components or elements that cooperate to limit relative lateral movement of the outer ring **340** and the outer inner rim **331.**

Other elements illustrated, such as, for example, fastener receiving passageways **324** within inwardly extending flange ring **325,** the tread assemblies **370,** and the clamping arrangement **373** including the inboard clamping members **374** and fasteners **379a,** are similar to corresponding elements described with respect to the embodiments described above. Accordingly, these elements as they relate to the present embodiments need no further discussion.

A method aspect is directed to method of making a wheel assembly **330** to be coupled to a hub of a vehicle. The method includes operatively coupling a plurality of gas springs **350** between an inner rim **331** to be coupled to the hub of the vehicle and an outer rim **333** surrounding the hub to provide a gas suspension for relative movement between the inner rim and the outer rim. The method may also include coupling an outer ring **340** to the outer rim **333** that defines a closeable gap **341** with adjacent interior portions of the inner rim to define a mechanical stop to limit relative movement between the inner rim and outer rim.

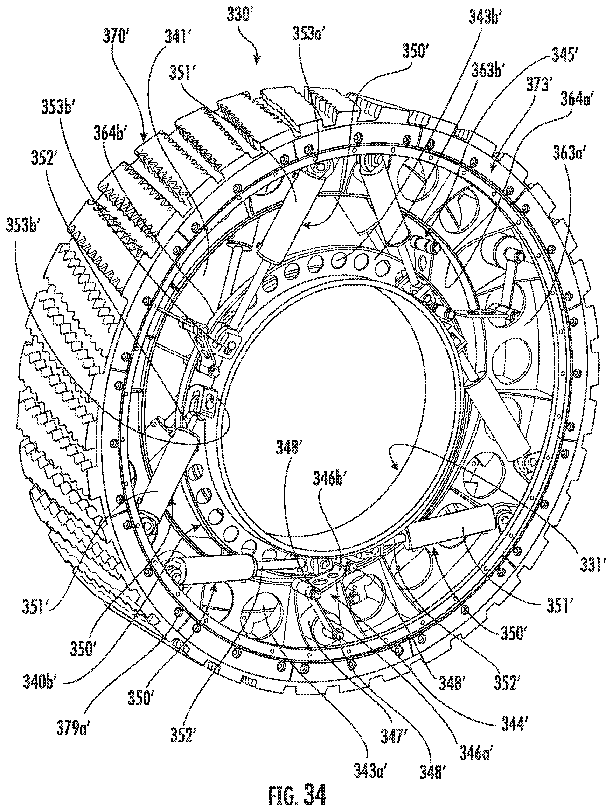

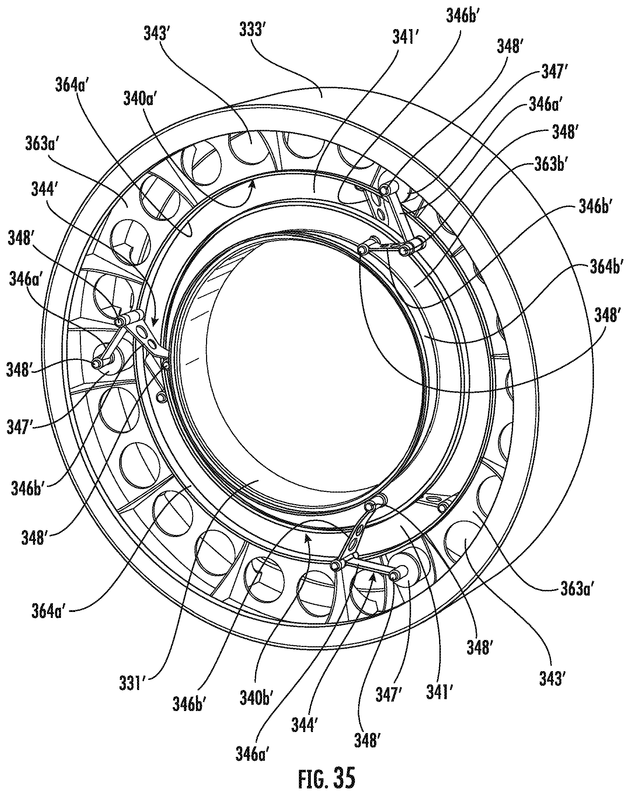

Referring now to FIGS. 34-35, in another embodiment of the wheel assembly **330',** an outer ring **340a'** is coupled to the outer rim **333'** and an inner ring **340b'** is coupled to the inner rim **331'.** The inner ring **340b'** defines a closeable gap **341'** with adjacent portions of the outer ring **340a'** to define a mechanical stop to limit relative movement between the inner and outer rims **331', 333'.** Similarly to the embodiments described above, the outer rim **333'** may have a diameter of at least 3.5 feet.

The outer ring **340a'** has an outer ring body **363a'** and an outer ring edge cap **364a'** carried by an inner edge of the outer ring body. The inner ring **340b'** also includes an inner ring body **363b'** and an inner ring edge cap **364b'** carried by an outer edge of the inner ring body. The inner and outer ring edge caps **364a', 364b'** provide an increased surface area mechanical stop to limit the relative movement between the inner and outer rims **331', 333'.**

Similarly to the embodiments above, the outer ring **340a'** also includes weight-reduction openings **343a'** therein. The inner ring **340b'** also includes weight-reduction openings **343b'** therein. The weight-reduction openings **343a', 343b'** each illustratively have a generally round or circular shape. The weight-reduction openings **343a', 343b'** may have another shape, such as oblong, hexagonal, and/or contoured for stress reduction, for example.

Gas springs **350'** are operatively coupled between the inner rim **331'** and the outer rim **333'.** Each gas spring **350'** may be a double-acting gas spring, for example, and include a double-acting gas cylinder **351'** and an associated piston **352'.** Of course, in some embodiments, each gas spring **350'** may be a single-acting gas spring. More than one type of gas spring **350'** may be used. The gas springs **350'** may be air springs and/or nitrogen springs, for example. The gas springs **350'** may include other gasses as well.

Illustratively, the gas springs **350'** are arranged in pairs on opposite sides of the outer ring **340a'.** More particularly, the gas springs **350'** diverge outwardly from the inner rim **331'** to the outer rim **333'.** A respective attachment bracket **353'** for each gas spring **350'** is coupled to the inner ring **340b',** and more particularly, the inner ring body **363b'.** Each attachment bracket **353'** may include a generally U-shaped or V-shaped base bracket that receives an end of the piston **352'** therein (e.g., between the arm of the U- or V-shaped bracket). A fastener fastens the end of the piston **352'** of the gas spring **350'** to the base bracket. A similar attachment bracket **353'** is coupled to the outer rim **333'** adjacent inboard and outboard surfaces. Accordingly, the gas springs **350'** are pivotably coupled between the inner and outer rims **331', 333'.**

Similar to the embodiments described above, as will be appreciated by those skilled in the art, the gas springs **350'** provide a gas suspension for relative movement between the inner rim **331'** and the outer rim **333'.** The gas springs **350'** have an operating stroke the permits the outer ring **340a'** to define a mechanical stop. In other words, the gas springs **350'** maintain the outer rim **333'** spaced apart from the inner rim **331'.** However, if pressure on any gas spring **350'** causes the gas spring to reach its limit under load or the gas spring fails, the outer ring **340a'** may act as a mechanical stop to limit relative movement between the inner and outer rims **331', 333'.** In other words, the outer ring **340a'** and gas springs **350'** may be considered as providing a run-flat capability. Since the gas springs **350'** are similar to the gas springs described with respect to the embodiments above, further details of the gas springs need not be described.

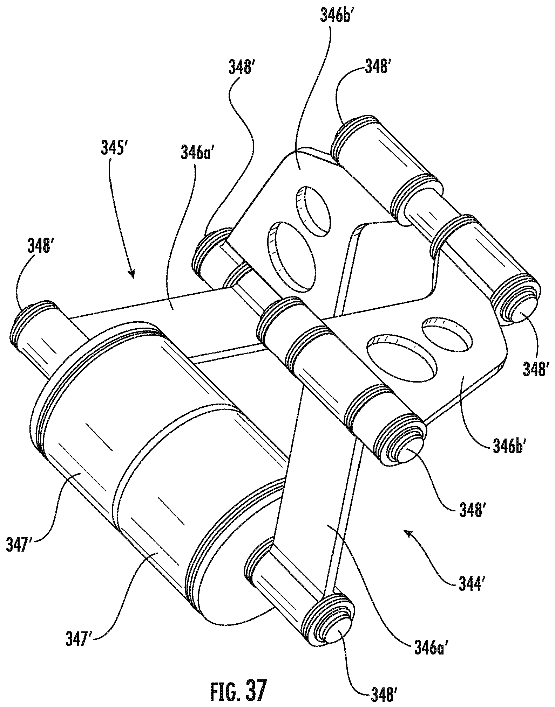

Referring additionally to FIG. 37, the wheel assembly **330'** also includes inboard lateral stops **344'** carried between an inboard side of the outer rim **333'** and an inboard side of the inner rim **331'.** More particularly, the inboard lateral stops **344'** are illustratively in the form of hinge retainers or scissor hinges. Each inboard lateral stop **344'** includes inboard hinge brackets **346a', 346b'** and an inboard elastomeric body **347',** for example, a urethane body, carried by the hinge bracket adjacent an inboard side of the outer ring **340a'.** The inboard elastomeric body **347'** couples to a wall portion of outer ring **340a'** by way of a hinge pin **348'.** The hinge brackets **346a', 346b'** are coupled together by way of a hinge pin **348'.** The hinge bracket **346b'** is coupled to a wall portion of the inner ring **340b'** by way of a hinge pin **348'.**

The wheel assembly **330'** also includes outboard lateral stops **345'** carried between an outboard side of the outer rim 333' and an outboard side of the inner rim 331'. More particularly, the outboard lateral stops **345'** are illustratively in the form of hinge retainers or scissor hinges. Each outboard lateral stop **345'** includes outboard hinge brackets **346a', 346b'** and an outboard elastomeric body **347',** for example, a urethane body, carried by the hinge bracket adjacent an outboard side of the outer ring **340a'.** The outboard elastomeric body **347'** couples to a wall portion of outer ring **340a'** opposite a corresponding portion of the inboard lateral stop **344'** by way of a hinge pin **348',** which may be shared with the hinge pin of the inboard lateral stop. The hinge brackets **346a', 346b'** are coupled by way of a hinge pin **348'.** The hinge bracket **346b'** is coupled to a wall portion of the inner ring **340b'** opposite the corresponding portion of the inboard lateral stop **344'** by way of a hinge pin **348',** which may be shared with the hinge pin of the inboard lateral stop. As will be appreciated by those skilled in the art, the inboard lateral stops **344'** are structurally similar to the outboard lateral stops **345',** just positioned opposite (i.e., on the inboard side) to the outboard lateral stops.

Those skilled in the art will appreciate that the inboard and outboard lateral stops **344', 345'** limit relative movement between the outer ring **340a'** and the inner ring **340b'.** In other words, turning, for example, of the vehicle may cause lateral movement of the outer ring **340a'** relative to the inner ring **340b'.** The inboard and outboard lateral stops **344', 345'** may limit the amount of lateral movement of the outer ring **340a'** relative to the inner ring **340b'** to thereby maintain structural integrity of the wheel assembly 330'. Of course, the inboard and outboard lateral stops **344', 345'** may include other and/or additional components or elements that cooperate to limit relative lateral movement between the outer ring **340a'** and the outer inner rim **331'.**

Other elements illustrated, such as, for example, the tread assemblies 370' and the clamping arrangement **373'** including the inboard clamping members **374'** and fasteners **379a',** are similar to corresponding elements described with respect to the embodiments described above. Accordingly, these elements as they relate to the present embodiments need no further discussion.

A method aspect is directed to a method of making a wheel assembly 330' to be coupled to a hub of a vehicle. The method includes operatively coupling a plurality of gas springs 350' between an inner rim 331' to be coupled to the hub of the vehicle and an outer rim 333' surrounding the hub to provide a gas suspension for relative movement between the inner rim and the outer rim. The method also includes coupling an outer ring **340a'** to the outer rim 333' and coupling an inner ring **340b'** to the inner rim 331' that defines a closeable gap 341' with adjacent interior portions of the outer ring to define a mechanical stop to limit relative movement between the inner rim and outer rim.

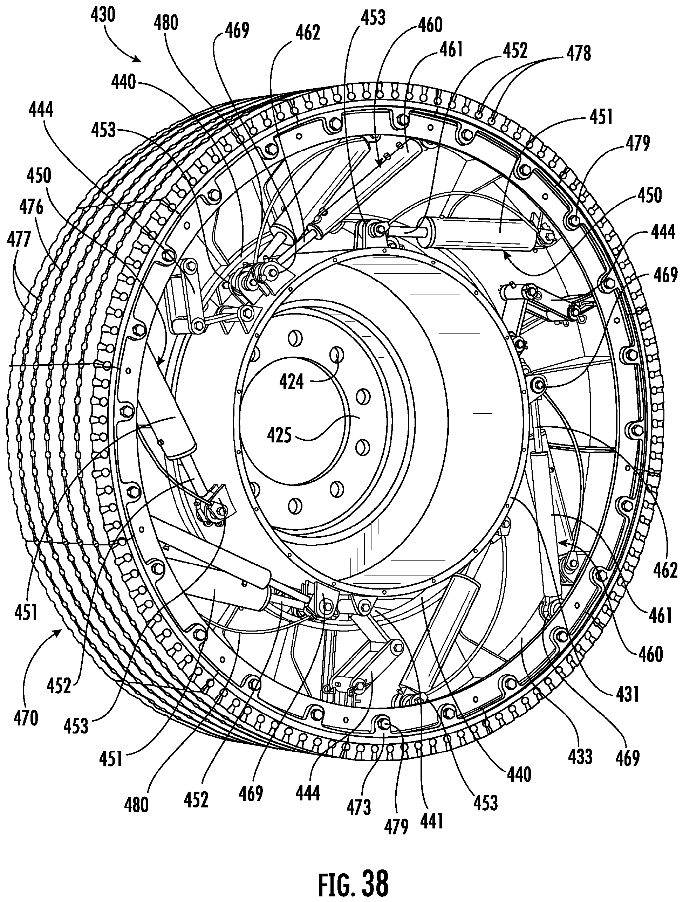

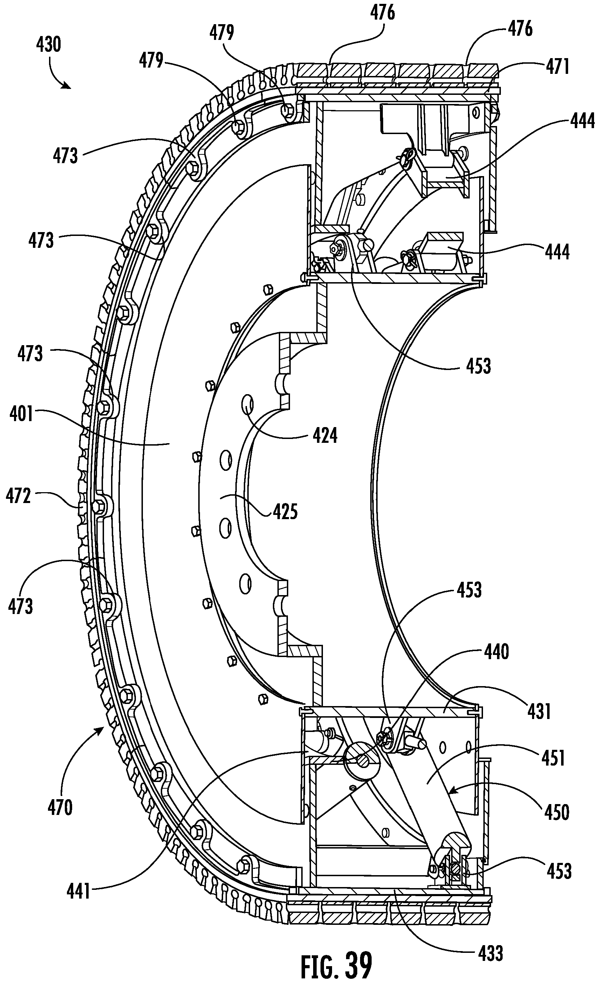

Referring now to FIGS. 38-39, in another embodiment of the wheel assembly **430,** an outer ring **440** or disk is coupled to the outer rim **433** adjacent an inboard side of the outer rim. The outer ring **440** being coupled to an inboard side of the outer rim **433** defines a closable gap **441** with adjacent interior portions of an inboard side of the inner rim **431** to define a mechanical stop to limit relative movement between the inner and outer rims. Similarly to the embodiments described above, the outer rim 433 may have a diameter of at least 3.5 feet.

Gas springs **450** are operatively coupled between the inner rim **431** and the outer rim **433.** Each gas spring **450** may be a double-acting gas spring, for example, and include a double-acting gas cylinder **451** and an associated piston **452.** Of course, in some embodiments, each gas spring **450** may be a single-acting gas spring. More than one type of gas spring **450** may be used. The gas springs **450** may be air springs and/or nitrogen springs, for example. The gas springs **450** may include other gasses as well.

Illustratively, the gas springs **450** are arranged on an outboard side of the outer ring **440.** As will be appreciated by those skilled in the art, the position of the gas springs **450** on an outboard side of the outer ring **440** and the position of the outer ring adjacent in inboard side of the inner and outer rims **431, 433** may advantageously permit relatively easy access to serviceable parts, such as, for example, the gas springs, hydraulic dampers **460,** and lateral stops **444.** In other words, the outer ring **440** may not inhibit or block access to the serviceable parts, when for example, an outboard cover of the wheel assembly **430** is removed for service.

A respective attachment bracket **453** for each gas spring **450** is coupled to the inner rim **431.** Each attachment bracket **453** may include a generally U-shaped or V-shaped base bracket that receives an end of the piston **452** therein (e.g., between the arm of the U- or V-shaped bracket). A fastener fastens the end of the piston **452** of the gas spring **450** to the attachment bracket **453.** A similar attachment bracket **453** is coupled to the outer rim **433.** Accordingly, the gas springs **450** are pivotably coupled between the inner and outer rims **431, 433.**

Similar to the embodiments described above, as will be appreciated by those skilled in the art, the gas springs **450** provide a gas suspension for relative movement between the inner rim **431** and the outer rim **433.** The gas springs **450** have an operating stroke the permits the outer ring **440** to define a mechanical stop. In other words, the gas springs **450** maintain the outer rim **433** spaced apart from the inner rim **431.** However, if pressure on any gas spring **450** causes the gas spring to reach its limit under load or the gas spring fails, the outer ring **440** may act as a mechanical stop to limit relative movement between the inner and outer rims **431, 433.** In other words, the outer ring **440** and gas springs **450** may be considered as providing a run-flat capability. Since the gas springs **450** are similar to the gas springs described with respect to the embodiments above, further details of the gas springs need not be described.

The wheel assembly **430** includes lateral stops **444** coupled between the inner and outer rims 431, **433** to limit relative lateral movement between the inner and outer rims. The lateral stops **444** are illustratively coupled adjacent an inboard side of the outer rim **433** and an inboard side of the inner rim **431.** The lateral stops **444** are illustratively in the form of hinge retainers or scissor hinges. The lateral stops **444** may be similar to the lateral stops described above and include elastomeric bodies. Of course, the lateral stops **444** may include other components and/or may be coupled alternatively or additionally adjacent an outboard side of the inner and outer rims **431, 433.**

Hydraulic dampers **460** are illustratively operatively coupled between the inner and outer rims **431, 433.** The hydraulic dampers **460** may be in the form of oil dampers, for example. Of course, all or some of the dampers may include other, additional, or different fluids therein. Each hydraulic damper **460** includes a double-acting hydraulic cylinder **461** and an associated piston **462.**

A respective hydraulic damper **460** is coupled adjacent a corresponding gas spring **450.** In other words, each hydraulic damper **460** is aligned side-by-side (e.g., at about the same angle between the gas spring and the inner and outer rims **431, 433** or the coupling location) with a corresponding gas spring **450.** Thus, for a wheel assembly **430** that includes six (6) gas springs **450,** there would be six (6) hydraulic dampers **460.** Similarly to the gas springs **450,** respective mounting brackets **469** couple each hydraulic damper **460** to the inner and outer rims **431, 433,** respectively.

As will be appreciated by those skilled in the art, the hydraulic dampers **460** may dampen or reduce vibrations and movements caused by traversing the ground or by movement of the wheel assembly **430** over the ground. Moreover, as double-acting hydraulic dampers **460,** each hydraulic damper advantageously dampens on both extension and compression.

Cable ties **480** are coupled to opposing ends of the gas springs **450.** More particularly, each cable tie or safety cable **480** is coupled to a corresponding mounting bracket **453** of each gas spring **450.** When a given gas spring's **450** operating stroke is retracted (i.e., the piston **452** is retracted within the cylinder **451),** the corresponding safety cable **480** has slack. However, if a given gas spring **450** exceeds its operating stroke limitations (i.e., the piston **452** extends outwardly from the cylinder **451** beyond operational limits), for example, if the gas spring malfunctions, the safety cable **480** would become taught and may thus prevent the gas piston from separating from the cylinder as during a failure.

A method aspect is directed to a method of making a wheel assembly **430** to be coupled to a hub of a vehicle. The method includes operatively coupling a plurality of gas springs **450** between an inner rim **431** to be coupled to the hub of the vehicle and an outer rim **433** surrounding the hub to provide a gas suspension for relative movement between the inner rim and the outer rim. The method also includes coupling an outer ring **440** adjacent an inboard side of the outer rim **433,** the outer ring defining a closeable gap **441** with adjacent interior portions of an inboard side of the inner rim **431** to define a mechanical stop to limit relative movement between the inner rim and outer rim. The plurality of gas springs **450** are operatively coupled on an outboard side of the outer ring **440.**

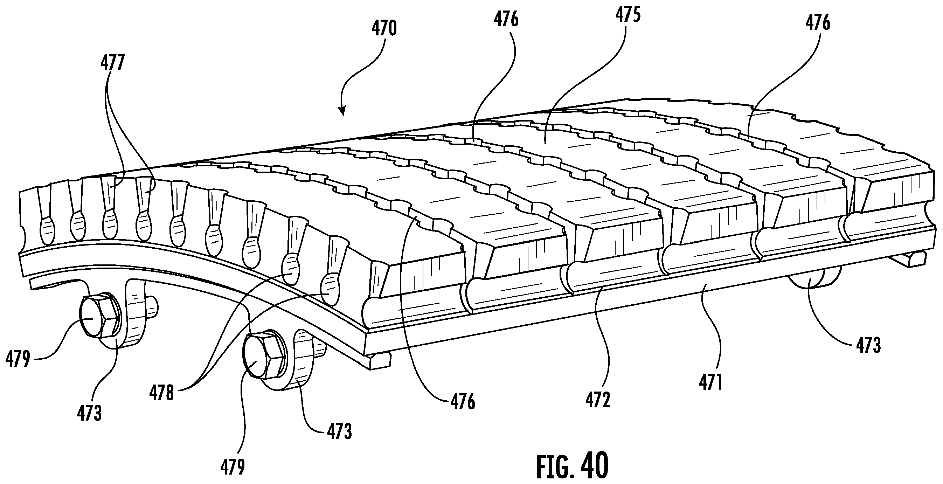

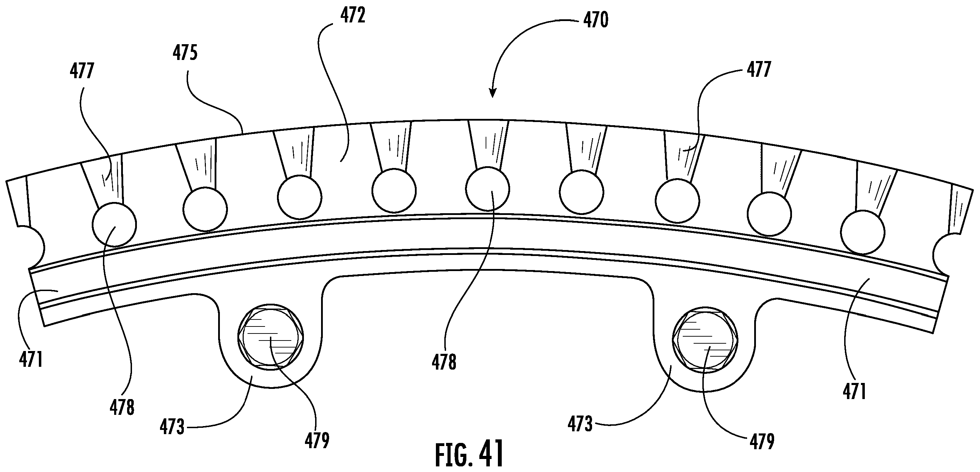

Referring now additionally to FIGS. 40-41, the wheel assembly **430** includes a tread assembly **470** that includes a tread body **472** and a clamping arrangement **473.** The tread body **472** is carried by the outer rim **433** and has an outer contact surface **475,** an inboard side, and an outboard side. The tread body **472** may include rubber, for example. Of course, the tread body **472** may include other and/or additional materials. The tread body **472** also has a first plurality of embedded passageways **478** below the outer contact surface **475** and extending between the inboard and outboard sides. More particularly, the first plurality of embedded passageways **478,** which illustratively have a circular shape, open outwardly to the inboard and outboard sides. In other words, the first plurality of embedded passageways **478** may conceptually be considered tunnels within the tread body **472** that extend between the inboard and outboard sides.

The tread body **472** also includes a second plurality of circumferential grooves **476** extending downward from the outer contact surface **475** and intersecting the first plurality of embedded passageways **478.** The second plurality of circumferential grooves **476** may have a v-shape with the wider opening of v-shape being in the outer contact surface **475.** Illustratively, there are five circumferential grooves **476,** but those skilled in the art will appreciate there may be any number of circumferential grooves, for example, based upon the type of contact surface and usage application.

The tread body **472** also includes a third plurality of frustoconical opening features **477** extending inwardly from the outer contact surface **475.** While frustoconical opening features **477** are illustrated, the opening features may have another shape, for example, cylindrical. The third plurality of frustoconical opening features **477** are illustratively aligned along the corresponding ones of the second plurality of circumferential grooves **476.** In some embodiments, the third plurality of frustoconical opening features **477** may not be aligned with the second plurality of circumferential grooves **476.** For example, the third plurality of frustoconical opening features **477** may be spaced about the outer contact surface **475,** and/or may extend downwardly from the outer contact surface to intersect the first plurality of embedded passageways **478.**

The tread assembly **470** may also include a tread body support **471.** The tread body support **471** may be in the form of a metal plate (e.g., an arcuate metal plate) that couples to an outer circumference of the outer rim **433.** The tread body **472** may be coupled or bonded, for example, glued, fastened, etc., to the tread body support **471.**

A clamping arrangement or clamping member **473** removably secures the tread body **472** to the outer rim. The clamping arrangement **473** couples to the inboard and outboard sides of the outer rim **433,** respectively, by way of fasteners **479,** for example, threaded fasteners to facilitate removal and replacement, for example, when the tread body **472** wears or it is desirable to replace the tread body. The threaded fasteners **479** may extend through openings in the clamping arrangement **473** and engage corresponding threaded openings in the outer rim 433. Other types of clamping arrangements or members, for example, such as those described above with respect to other embodiments, may be used. Those skilled in the art will appreciate that while a single tread body support **471,** the tread body **472,** and clamping arrangement **473** have been described herein, there may be more than one tread body support, tread body, and clamping arrangement coupled in end-to-end relation around the outer rim **433,** for example, as illustrated.

A method aspect is directed to a method of making a wheel assembly **430** to be coupled to a hub of a vehicle. The method may include operatively coupling a plurality of gas springs **450** between an inner rim **431** to be coupled to the hub and an outer rim **433** surrounding the hub to provide a gas suspension permitting relative movement between the inner rim and the outer rim. The method may further include coupling a tread body **472** to be carried by the outer rim **433** and having an outer contact surface **475,** an inboard side, and an outboard side. The tread body **472** may also have a first plurality of embedded passageways **478** below the outer contact surface **475** and extending between the inboard and outboard sides, and a second plurality of circumferential grooves **476** extending downward from the outer contact surface and intersecting the first plurality of embedded passageways.

Other elements illustrated, such as, for example, fastener receiving passageways **424** within inwardly extending flange ring **425,** the clamping arrangement **473,** and the sidewall covers and cover assemblies **401** are similar to corresponding elements described with respect to the embodiments described above. Further details of sidewall cover assemblies **401** are described in U.S. Patent Application Serial No. 16/886,065 the entire contents of which are hereby incorporated by reference. Accordingly, these elements as they relate to the present embodiments need no further discussion.

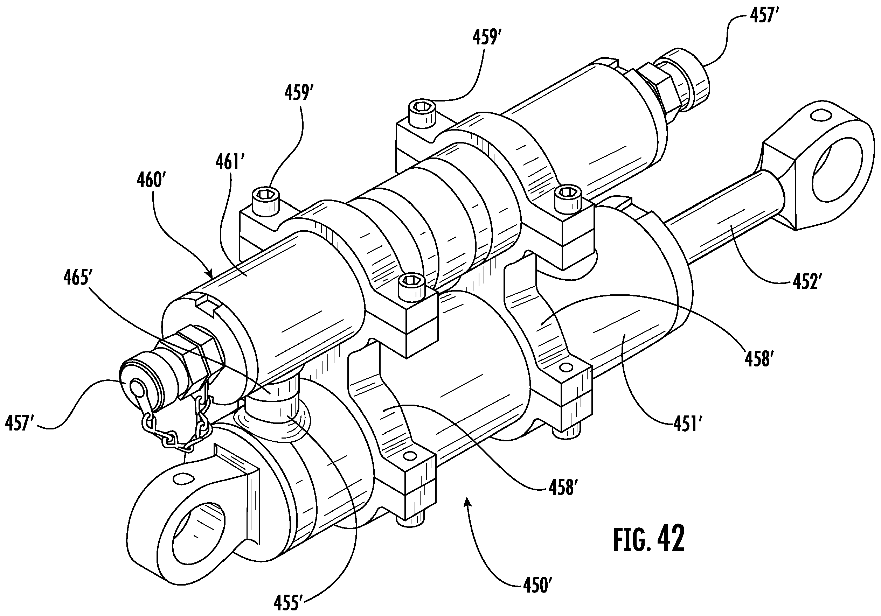

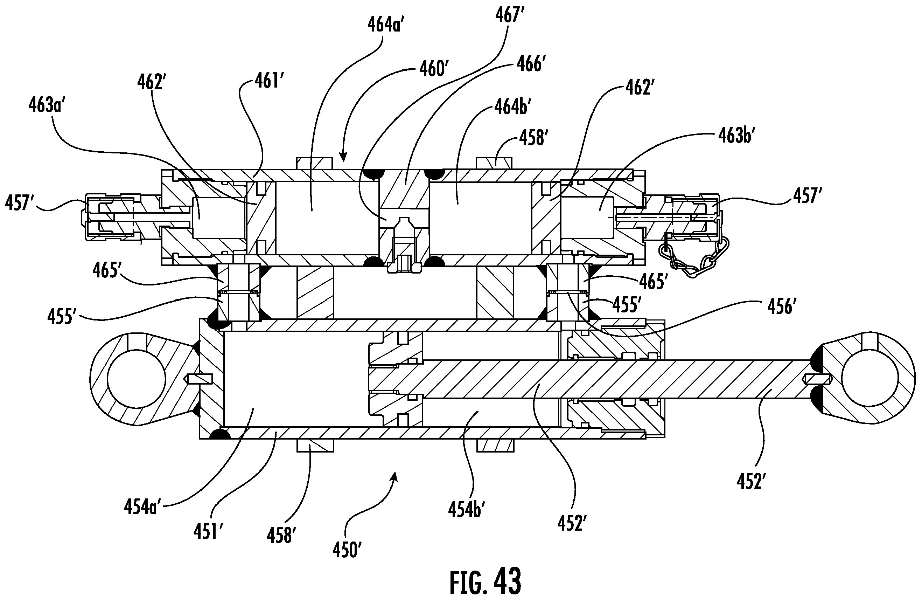

Referring now additionally to FIGS. 42-43 in another embodiment, the gas springs **450'** each have a cylinder body **451'** and an associated piston **452'** movable within the cylinder body. The piston **452'** divides the cylinder body **451'** into first and second gas chambers **454a', 454b'.**

A respective hydraulic damper **460'** is mounted on each gas spring **450'** and operatively coupled between the first and second gas chambers **454a', 454b'.** Each hydraulic damper **460'** includes a damper cylinder body **461',** and first and second pistons **462'** movable within the damper cylinder body. The first and second pistons **462'** of each hydraulic damper **460'** define first and second damper gas chambers **463a', 463b'** and first and second hydraulic fluid chambers **464a', 464b'.**

The first and second damper gas chambers **463a', 463b'** are coupled to respective ones of the first and second gas chambers **454a', 454b'** of the gas springs **450',** for example, by way of respective conduits **455', 465'.** More particularly, a gas spring conduit **455'** and a hydraulic damper conduit **465'** may be aligned and mateably coupled when the hydraulic damper **460'** is mounted to the gas spring **450'.** A seal **456',** for example, a sealing washer, may be between or at an interface between the gas spring conduit **455'** and a hydraulic damper conduit **465'.** Of course, other mating arrangements to permit gas communication between the first and second gas chambers **454a', 454b'** and the first and second damper gas chambers **463a', 463b'.** The hydraulic damper **460'** illustratively has ports **457'** at opposing ends.

A chamber wall **466'** divides the damper cylinder body **461'** into the first and second hydraulic fluid chambers **464a', 464b'.** The chamber wall **466'** illustratively has an orifice **467'** therein permitting hydraulic fluid to pass between the first and second hydraulic fluid chambers **464a', 464b'.**

Cylinder clamps **458'** illustratively mount the respective hydraulic damper **460'** to a corresponding gas spring **450'** in a piggy-back configuration. Each cylinder clamp **458'** has a figure eight shape. Each cylinder clamp **458'** may conceptually be in the form of a double pipe clamp that permits the gas spring **450'** and hydraulic damper **460'** to be slidably received within the respective openings and tightened into place using respective fasteners **459'.** While a cylinder clamp **458'** is illustrated, those skilled in the art will appreciate that other and/or additional types of cylinder clamps may be used.

A method aspect is directed to a method of making a wheel assembly **430** to be coupled to a hub of a vehicle. The method may include operatively coupling a plurality of gas springs **450'** between an inner rim **431** to be coupled to the hub of the vehicle and an outer rim **433** surrounding the hub to provide a gas suspension for relative movement between the inner rim and the outer rim. Each of the plurality of gas springs **450'** may include a cylinder body **451'** and an associated piston **452'** moveable therein and dividing the cylinder body into first and second gas chambers **454a', 454b'.** The method may also include mounting a respective hydraulic damper **460'** on each gas spring **450'** and operatively coupled between the first and second gas chambers **454a', 454b'.**

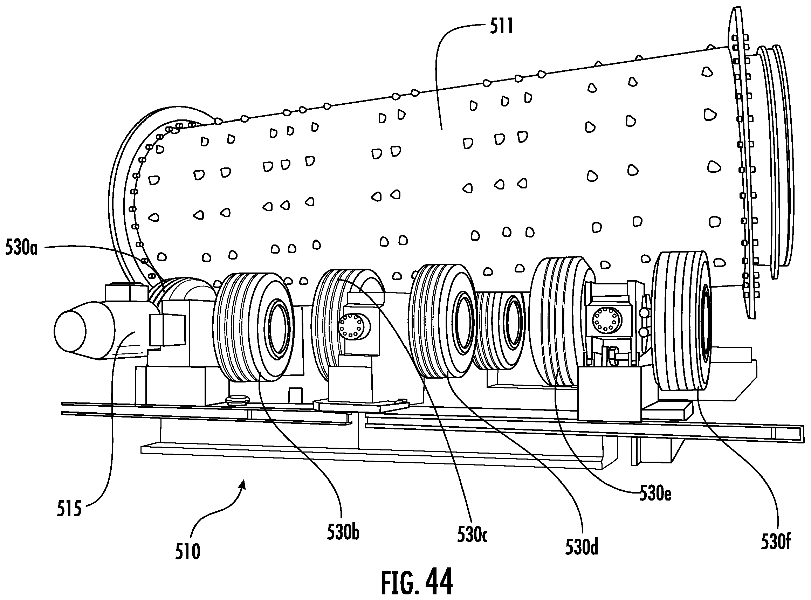

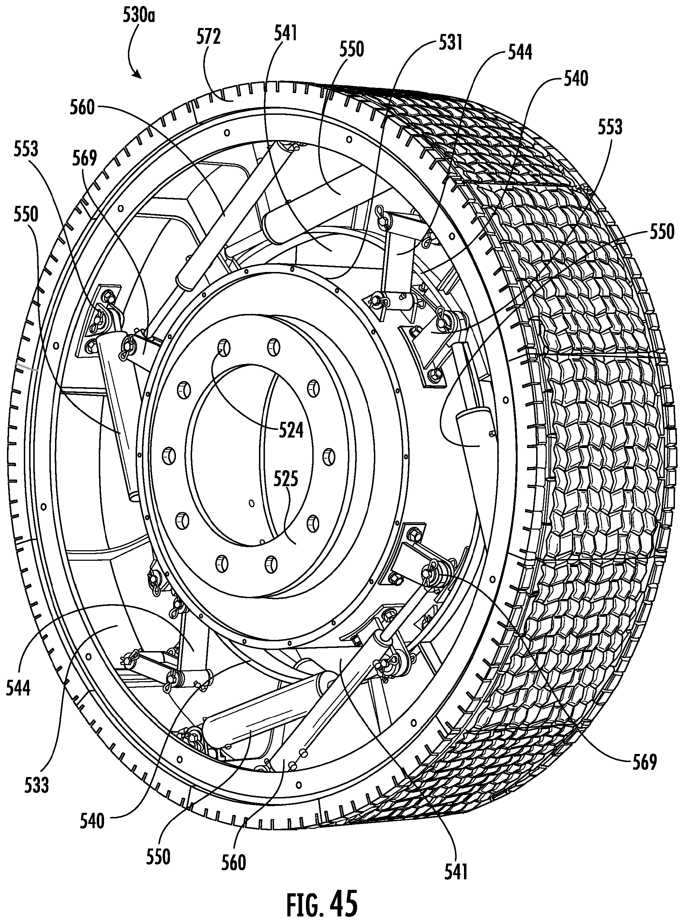

Referring now to FIGS. 44-45, in another embodiment, a mine material processing apparatus 510 includes a rotatable drum **511** to process mine material. Wheel assemblies **530a-530f,** for example, as described herein, are illustratively configured for rotation of the rotatable drum **511.**

Similar to other wheel assemblies, each wheel assembly **530a-530f** includes an inner rim **531,** an outer rim **533** surrounding the inner rim, and gas springs 550 operatively coupled between the inner and outer rims. An outer ring **540** is coupled to the outer rim **533** and, as described in embodiments above, defines a closable gap **541** with adjacent portions of the inner rim **531** to define a mechanical stop to limit movement between the inner and outer rims. Other elements of the wheel assembly **530a** illustrated but not specifically described, such as, for example, the dampers **560,** the tread body **572,** the lateral stops **544,** the gas spring and damper mounting brackets **553, 569,** and the fastener receiving passageways **524** within inwardly extending flange ring **525,** for example, are similar to those described above.

A drive motor **515** is coupled to the inner rim **531** of wheel assemblies **530a, 530b.** More particularly, the drive motor **515** may be coupled to the wheel assemblies via the fastener receiving passageways **524** within inwardly extending flange ring **525.** The drive motor **515** may include an electric motor coupled to a drivetrain, for example. In some embodiments, the drive motor **515** may directly drive the wheel assembly **530a-530f.** Other wheel assemblies **530c-530f** may be considered idle wheel assemblies and may not be driven, but rather are permitted to rotate freely or independently of a drive motor **515.** In some embodiments, a respective drive motor 515 may be coupled to the inner rim **531** of each wheel assembly **530a-530f.**

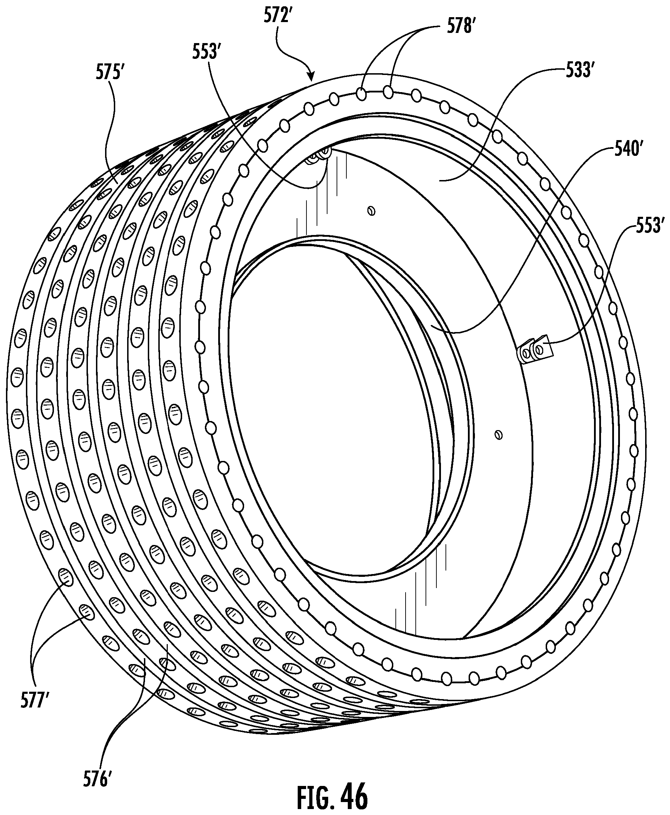

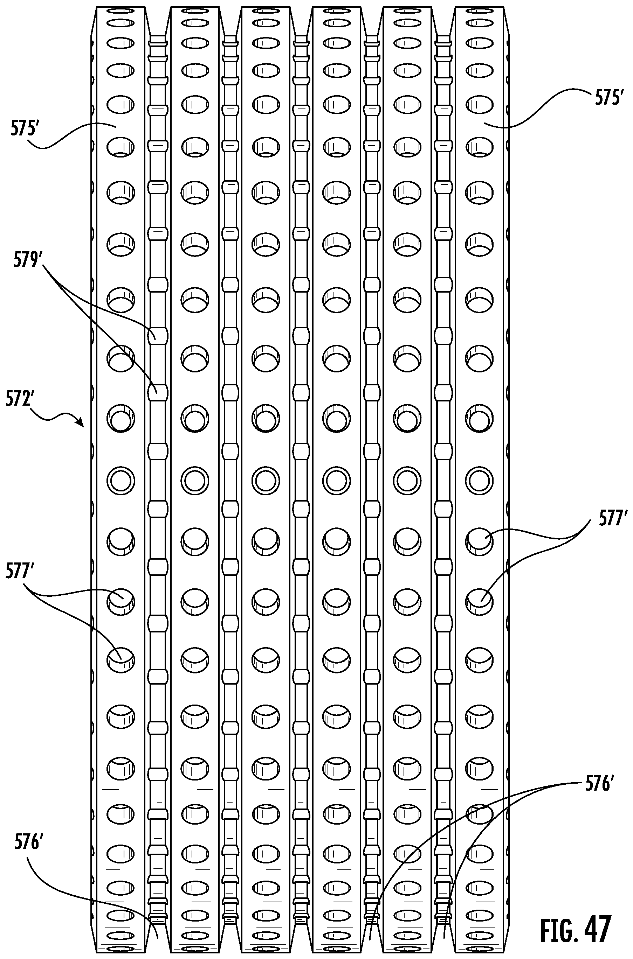

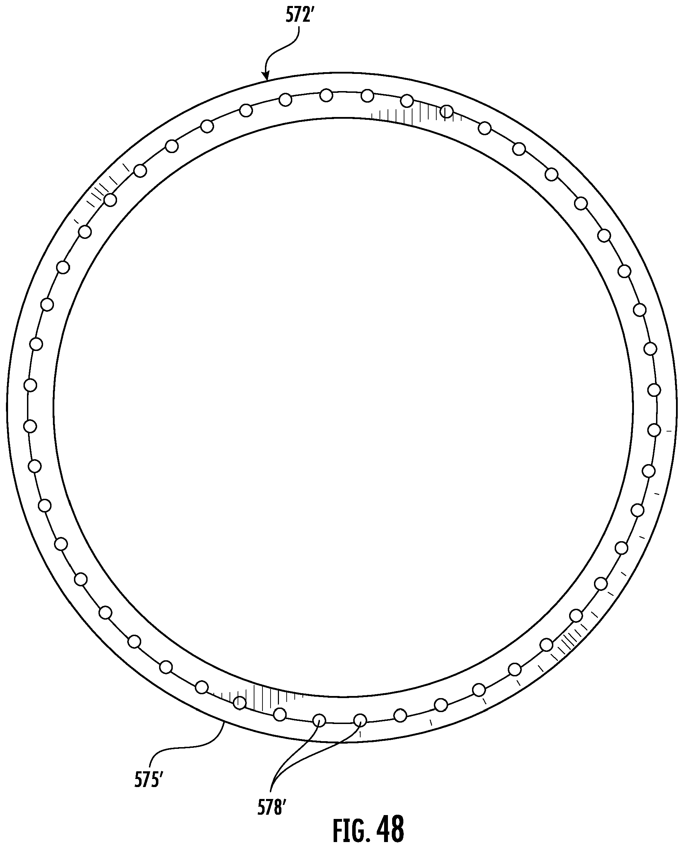

Referring now to FIGS. 46-48, in another embodiment, a tread body **572',** for example, a rubber tread body, is carried by the outer rim **533'.** The tread body **572'** has an outer contact surface **575',** an inboard side, and an outboard side. Embedded passageways **578'** are below the outer contact surface **575'** and extend between the inboard and outboard sides. The embedded passageways **578'** are illustratively circular. Of course, the embedded passageways **578'** may be another shape.

Circumferential grooves **576',** for example, having a U-shape, extend downward from outer contact surface **575'** to expose the embedded passageways **578'** at intersections **579'** thereof. Opening features **577'** extend inwardly from the outer contact surface **575'.** The opening features **577'** are illustratively round or have a circular shape. The opening features **577'** may have another shape.

As will be appreciated by those skilled in the art, the tread body **572'** illustratively has a circular shape to permit changing of tread body by slidably removing the tread body from outer rim **533'.** Replacement of the tread body **572'** is performed by sliding the tread body over the outer rim **533'.** In some embodiments, the tread body **572'** may not be bonded to the outer rim **533',** since as use in a mine material processing apparatus (i.e., to rotate the rotatable drum), forces that typically occur on vehicle, for example, from relatively hard braking, may be reduced. Elements illustrated but not specifically described, such as, for example, the outer ring **540'** and the gas spring mounting brackets **553',** are similar to those described above.

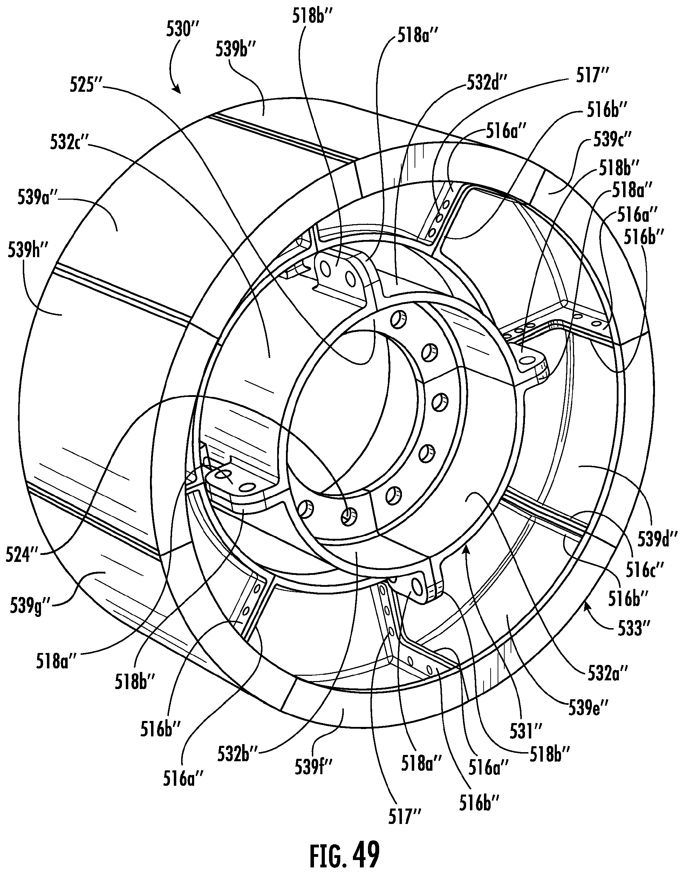

Referring now to FIG. 49, in another embodiment of a wheel assembly 530" for mine material processing, each wheel assembly may be segmented, for example. More particularly, the inner rim **531"** may include arcuate inner rim segments **532a"-532d"** coupled together, for example, in end-to-end relation, to define a circular inner rim.

Each arcuate inner rim segment **532a"-532d"** has end flanges **518a", 518b"** at opposing ends. More particularly, a respective inner flange **518a", 518b"** is at each end of an arcuate inner rim segment **532a"-532d"** for coupling adjacent ones of the arcuate inner rim assemblies in end-to-end relation. Each inner flange **518a", 518b"** has openings or inner flange fastener receiving passageways therein to receive inner flange fasteners therethrough when aligned with an adjacent end flange.

The wheel assembly **530"** also includes an outer rim **533"** having a circular shape. Similar to the circular inner rim **531"** the circular outer rim **533"** is segmented, or defined by coupled together arcuate outer rim segments **539a"-539h".** While eight arcuate outer rim segments **539a"-539h"** are illustrated, it will be appreciated by those skilled in the art that there may be any number of arcuate outer rim segments, for example, and, as illustrated, the number of arcuate outer rim segments need not match the number of arcuate inner rim segments **532a"-532d".**

Each arcuate outer rim segment **539a"-539h"** also has end flanges **516a", 516b"** at opposing ends. More particularly, a respective outer flange **516a", 516b"** is at each end of the arcuate outer rim segment **539a" -539h"** for coupling adjacent ones of the arcuate outer rim segments. Each outer flange **516a", 516b"** has openings or outer flange fastener receiving passageways **517"** therein to receive outer flange fasteners therethrough when aligned with an adjacent outer flange. Elements illustrated, but not specifically described, for example, fastener receiving passageways **524"** within inwardly extending flange ring **525",** and further details of a segmented wheel assembly, are described in U.S. Patent Application Serial No. 16/865,231, the entire on contents of which are herein incorporated by reference.

A method aspect is directed to a method of processing mine material. The method includes operating a plurality of wheel assemblies **520a-520f** to rotate a rotatable drum **511** to process the mine material. Each wheel assembly **520a-520f** includes an inner rim **531,** an outer rim **533** surrounding the inner rim, and a plurality of gas springs **550** operatively coupled between the inner rim and the outer rim.

Another method aspect is directed to a method of making an apparatus **510** for processing mine material. The method includes arranging a plurality of wheel assemblies **520a-520f** for rotation of a rotatable drum **511** to process the mine material. Each wheel assembly **520a-520f** includes an inner rim **531,** an outer rim **533** surrounding the inner rim, and a plurality of gas springs **550** operatively coupled between the inner rim and the outer rim.

While several embodiments have been described herein, those skilled in the art will appreciate that any one or more elements from any one or more embodiments may be used in conjunction with any one or more elements from any other embodiment or embodiments. Moreover, while reference is made herein to inner and outer, those skilled in the art will appreciate that in many embodiments, elements described with respect to inner may be used as outer and vice versa, and/or those elements described as being inner may be used with elements described as being outer and vice versa.

## Claims

1. A wheel assembly (430) to be coupled to a hub of a vehicle, the wheel assembly comprising:
an inner rim (431) to be coupled to the hub of the vehicle;
an outer rim (433) surrounding the hub;
a plurality of gas springs (450) operatively coupled between said inner rim and said outer rim to provide a gas suspension for relative movement between said inner rim and said outer rim; and
an outer ring (440) coupled to the outer rim laterally offset from a lateral center of the outer rim toward an inboard side of said outer rim and defining a closeable gap with adjacent interior portions of an inboard side of said inner rim to define a mechanical stop to limit relative movement between said inner rim and outer rim;
said plurality of gas springs being arranged solely on an outboard side of said outer ring to permit access for service to the plurality of gas springs from the outboard side.

2. The wheel assembly of Claim 1 further comprising a plurality of hydraulic dampers (460) operatively coupled between said inner rim and said outer rim.

3. The wheel assembly of Claim 2 wherein each hydraulic damper is aligned side-by-side with a corresponding one of said plurality of gas springs.

4. The wheel assembly of Claim 1 further comprising a plurality of cable ties (480) each coupled to opposing ends of a corresponding one of said plurality of gas springs.

5. The wheel assembly of Claim 1 wherein said plurality of gas springs have an operating stroke permitting said outer ring to define the mechanical stop.

6. The wheel assembly of Claim 1 comprising a respective attachment bracket for each gas spring coupled to said outer rim.

7. The wheel assembly of Claim 1 comprising a plurality of lateral stops (444) coupled between said outer rim and said inner rim and cooperating to limit relative lateral movement between said outer ring and said inner rim.

8. The wheel assembly of Claim 7 wherein said plurality of lateral stops comprises a plurality of hinge retainers.

9. The wheel assembly of Claim 1 wherein said outer rim has a diameter of at least 3.5 feet.

10. The wheel assembly of Claim 1 wherein each of said plurality of gas springs comprises a double-acting gas cylinder and associated piston.

11. A method of making a wheel assembly (430) to be coupled to a hub of a vehicle, the method comprising:
operatively coupling a plurality of gas springs (450) between an inner rim (431) to be coupled to the hub of the vehicle and an outer rim (433) surrounding the hub to provide a gas suspension for relative movement between the inner rim and the outer rim; and
coupling an outer ring (440) to the outer rim laterally offset from a lateral center of the outer rim toward an inboard side of the outer rim that, the outer ring defining a closeable gap with adjacent interior portions of an inboard side of the inner rim to define a mechanical stop to limit relative movement between the inner rim and outer rim;
the plurality of gas springs being operatively coupled solely on an outboard side of the outer ring to permit access for service to the plurality of gas springs from the outboard side.

12. The method of Claim 11 comprising operatively coupling a plurality of hydraulic dampers (460) between the inner rim and the outer rim.

13. The method of Claim 12 wherein coupling the plurality of hydraulic dampers comprises coupling the plurality of hydraulic dampers to be aligned side-by-side with a corresponding one of the plurality of gas springs.

14. The method of Claim 11 comprising coupling each of a plurality of cable ties (480) to opposing ends of a corresponding one of the plurality of gas springs.

15. The method of Claim 11 wherein the plurality of gas springs have an operating stroke permitting said outer ring to define the mechanical stop.

16. The method of Claim 11 comprising coupling a respective attachment bracket (453) for each gas spring to the outer rim.

## Patentansprüche

1. Eine Radbaugruppe (430), die mit einer Nabe eines Fahrzeugs gekoppelt werden soll, wobei die Radbaugruppe umfasst:
einen Innenring (431), der mit der Nabe des Fahrzeugs koppelbar ist;
einen Außenring (433), der die Nabe umgibt;
eine Vielzahl von Gasfedern (450), die operativ zwischen dem Innenring und dem Außenring gekoppelt sind, um eine Gasfederung für die relative Bewegung zwischen dem Innenring und dem Außenring bereitzustellen; und
einen Außenring (440), der seitlich versetzt von einem seitlichen Zentrum des Außenrings zur Innenseite des Außenrings gekoppelt ist und eine schließbare Lücke mit angrenzenden inneren Teilen einer Innenseite des Innenrings definiert, um einen mechanischen Anschlag zu definieren, der die relative Bewegung zwischen dem Innenring und dem Außenring begrenzt;
wobei die Vielzahl von Gasfedern ausschließlich auf der Außenseite des Außenrings angeordnet sind, um den Zugang zur Wartung der Vielzahl von Gasfedern von der Außenseite zu ermöglichen.

2. Die Radbaugruppe nach Anspruch 1, weiter umfassend eine Vielzahl von hydraulischen Dämpfern (460), die operativ zwischen dem Innenring und dem Außenring gekoppelt sind.

3. Die Radbaugruppe nach Anspruch 2, wobei jeder hydraulische Dämpfer nebeneinander mit einer entsprechenden Gasfeder der Vielzahl von Gasfedern ausgerichtet ist.

4. Die Radbaugruppe nach Anspruch 1, weiter umfassend eine Vielzahl von Kabelbindern (480), die jeweils an gegenüberliegenden Enden einer entsprechenden Gasfeder der Vielzahl von Gasfedern gekoppelt sind.

5. Die Radbaugruppe nach Anspruch 1, wobei die Vielzahl von Gasfedern einen Arbeitsweg haben, der es dem Außenring ermöglicht, den mechanischen Anschlag zu definieren.

6. Die Radbaugruppe nach Anspruch 1, umfassend eine jeweilige Befestigungshalterung für jede Gasfeder, die mit dem Außenring gekoppelt ist.

7. Die Radbaugruppe nach Anspruch 1, umfassend eine Vielzahl von seitlichen Anschlägen (444), die zwischen dem Außenring und dem Innenring gekoppelt sind und zusammenwirken, um die relative seitliche Bewegung zwischen dem Außenring und dem Innenring zu begrenzen.

8. Die Radbaugruppe nach Anspruch 7, wobei die Vielzahl von seitlichen Anschlägen eine Vielzahl von Scharnierhaltern umfasst.

9. Die Radbaugruppe nach Anspruch 1, wobei der Außenringeinen Durchmesser von mindestens 3,5 Fuß hat.

10. Die Radbaugruppe nach Anspruch 1, wobei jede der Vielzahl von Gasfedern einen doppelt wirkenden Gaszylinder und einen zugehörigen Kolben umfasst.

11. Ein Verfahren zur Herstellung einer Radbaugruppe (430), die mit einer Nabe eines Fahrzeugs gekoppelt werden soll, wobei das Verfahren umfasst:
operatives Koppeln einer Vielzahl von Gasfedern (450) zwischen einem Innenring (431), der mit der Nabe des Fahrzeugs koppelbar ist, und einem Außenring (433), der die Nabe umgibt, um eine Gasfederung für die relative Bewegung zwischen dem Innenring und dem Außenring bereitzustellen; und
Koppeln eines Außenrings (440) seitlich versetzt von einem seitlichen Zentrum des Außenrings zur Innenseite des Außenrings, wobei der Außenring eine schließbare Lücke mit angrenzenden inneren Teilen einer Innenseite des Innenrings definiert, um einen mechanischen Anschlag zu definieren, der die relative Bewegung zwischen dem Innenring und dem Außenring begrenzt;
wobei die Vielzahl von Gasfedern operativ ausschließlich auf der Außenseite des Außenrings gekoppelt sind, um den Zugang zur Wartung der Vielzahl von Gasfedern von der Außenseite zu ermöglichen.

12. Das Verfahren nach Anspruch 11, umfassend das operative Koppeln einer Vielzahl von hydraulischen Dämpfern (460) zwischen dem Innenring und dem Außenring.

13. Das Verfahren nach Anspruch 12, wobei das Koppeln der Vielzahl von hydraulischen Dämpfern das Koppeln der Vielzahl von hydraulischen Dämpfern umfasst, um nebeneinander mit einer entsprechenden Gasfeder der Vielzahl von Gasfedern ausgerichtet zu sein.

14. Das Verfahren nach Anspruch 11, umfassend das Koppeln jedes Kabelbinders (480) an gegenüberliegenden Enden einer entsprechenden Gasfeder der Vielzahl von Gasfedern.

15. Das Verfahren nach Anspruch 11, wobei die Vielzahl von Gasfedern einen Arbeitsweg haben, der es dem Außenring ermöglicht, den mechanischen Anschlag zu definieren.

16. Das Verfahren nach Anspruch 11, umfassend das Koppeln einer jeweiligen Befestigungshalterung (453) für jede Gasfeder an den Außenring.

## Revendications

1. Ensemble roue (430) à coupler à un moyeu d'un véhicule, l'ensemble roue comprenant :
une jante intérieure (431) à coupler au moyeu du véhicule ;
une jante extérieure (433) entourant le moyeu ;
une pluralité de ressorts à gaz (450) qui sont couplés de manière fonctionnelle entre ladite jante intérieure et ladite jante extérieure afin de fournir une suspension à gaz destinée à un mouvement relatif entre ladite jante intérieure et ladite jante extérieure ; et
un anneau extérieur (440) qui est couplé à la jante extérieure, qui est décalé latéralement depuis un centre latéral de la jante extérieure vers un côté intérieur de ladite jante extérieure, et qui définit un espace fermable avec des portions intérieures adjacentes d'un côté intérieur de ladite jante intérieure afin de définir une butée mécanique pour limiter le mouvement relatif entre ladite jante intérieure et ladite jante extérieure,
ladite pluralité de ressorts à gaz n'étant disposée que sur un côté extérieur dudit anneau extérieur afin de permettre l'accès du service à la pluralité de ressorts à gaz à partir du côté extérieur.

2. Ensemble roue selon la revendication 1, comprenant en outre une pluralité d'amortisseurs hydrauliques (460) qui sont couplés de manière fonctionnelle entre ladite jante intérieure et ladite jante extérieure.

3. Ensemble roue selon la revendication 2, dans lequel chaque amortisseur hydraulique est aligné côte à côte avec un ressort à gaz correspondant de ladite pluralité de ressorts à gaz.

4. Ensemble roue selon la revendication 1, comprenant en outre une pluralité de serre-câbles (480), chacun étant couplé à des extrémités opposées d'un ressort à gaz correspondant de ladite pluralité de ressorts à gaz.

5. Ensemble roue selon la revendication 1, dans lequel ladite pluralité de ressorts à gaz a une course de fonctionnement permettant audit anneau extérieur de définir la butée mécanique.

6. Ensemble roue selon la revendication 1, comprenant un support de fixation respectif pour chaque ressort à gaz couplé à ladite jante extérieure.

7. Ensemble roue selon la revendication 1, comprenant une pluralité de butées latérales (444) qui sont couplées entre ladite jante extérieure et ladite jante intérieure, et qui coopèrent pour limiter le mouvement latéral relatif entre ledit anneau extérieur et ladite jante intérieure.

8. Ensemble roue selon la revendication 7, dans lequel ladite pluralité de butées latérales comprend une pluralité de retenues à charnière.

9. Ensemble roue selon la revendication 1, dans lequel ladite jante extérieure a un diamètre d'au moins 3,5 pieds.

10. Ensemble roue selon la revendication 1, dans lequel chacun de ladite pluralité de ressorts à gaz comprend un cylindre à gaz à double effet et un piston associé.

11. Procédé de fabrication d'un ensemble roue (430) à coupler à un moyeu d'un véhicule, le procédé consistant à :
coupler de manière fonctionnelle une pluralité de ressorts à gaz (450) entre une jante intérieure (431) à coupler au moyeu du véhicule et une jante extérieure (433) entourant le moyeu, afin de fournir une suspension à gaz destinée à un mouvement relatif entre la jante intérieure et la jante extérieure ; et
coupler un anneau extérieur (440) à la jante extérieure qui est décalé latéralement depuis un centre latéral de la jante extérieure vers un côté intérieur de la jante extérieure, l'anneau extérieur définissant un espace fermable avec des portions intérieures adjacentes d'un côté intérieur de la jante intérieure afin de définir une butée mécanique pour limiter le mouvement relatif entre la jante intérieure et la jante extérieure,
la pluralité de ressorts à gaz n'étant couplés de manière fonctionnelle que sur un côté extérieur de l'anneau extérieur afin de permettre l'accès du service à la pluralité de ressorts à gaz à partir du côté extérieur.

12. Procédé selon la revendication 11, consistant à coupler de manière fonctionnelle une pluralité d'amortisseurs hydrauliques (460) entre la jante intérieure et la jante extérieure.

13. Procédé selon la revendication 12, dans lequel le couplage de la pluralité d'amortisseurs hydrauliques consiste à coupler la pluralité d'amortisseurs hydrauliques de manière à ce qu'ils soient alignés côte à côte avec un ressort à gaz correspondant de la pluralité de ressorts à gaz.

14. Procédé selon la revendication 11, consistant à coupler chacun d'une pluralité de serre-câbles (480) à des extrémités opposées d'un ressort à gaz correspondant de la pluralité de ressorts à gaz.

15. Procédé selon la revendication 11, dans lequel la pluralité de ressorts à gaz a une course de fonctionnement permettant audit anneau extérieur de définir la butée mécanique.

16. Procédé selon la revendication 11, consistant à coupler un support de fixation respectif (453) pour chaque ressort à gaz à la jante extérieure.
